# EUROPEAN PATENT APPLICATION

(11) **EP 4 642 124 A1**
(43) Date of publication of application: **29.10.2025**
(21) Application number: 22968914.6
(22) Date of filing: 21.12.2022
(51) Int. Cl.: H04W 72/04, H04L 5/00

(54) **METHOD AND APPARATUS FOR DETERMINING TRANSMISSION CONFIGURATION INDICATOR STATE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2022/140847
(87) International publication number: WO 2024/130613

(57) **Abstract**

The present disclosure relates to a method and apparatus for determining a transmission configuration indicator (TCI) state, and a storage medium. The method for determining a TCI state comprises: receiving configuration information, wherein the configuration information is used for configuring a component carrier list, wherein the component carrier list comprises at least one serving cell, which comprises a first serving cell which performs multi transmission reception point (M-TRP) transmission indicated on the basis of single-downlink control information (S-DCI) and/or a second serving cell which performs M-TRP transmission indicated on the basis of multi-downlink control information (M-DCI); and receiving media access control (MAC) control unit (CE) signaling, wherein the MAC CE signaling is used for activating a unified TCI state of the first serving cell and/or the second serving cell. The present disclosure can implement the activation of a TCI state of a serving cell performing M-TRP transmission indicated on the basis of S-DCI and/or a serving cell performing M-TRP transmission indicated on the basis of M-DCI.

## Description

### FIELD

The present disclosure relates to the field of communication technologies, and in particular relates to a method and an apparatus for determining a transmission configuration indicator (TCI) state, and a storage medium.

### BACKGROUND

In new radio (NR), for example, in a case where a communication frequency band is in a frequency range 2, a high-frequency channel may attenuate quickly, and beam-based transmission and reception are required to ensure coverage.

At present, in order to reduce signaling overhead, utilization of a unified transmission configuration indicator (unified TCI) state is introduced. The unified TCI state may include a joint TCI state for uplink and downlink, to perform j oint indication for uplink and downlink. Alternatively, the unified TCI state may include a separate downlink TCI state (separate DL TCI state) and a separate uplink TCI state (separate UL TCI state), to indicate quasi co-location (QCL) parameters for uplink and downlink, respectively.

For example, in a case where a network device indicates a separate DL TCI state for downlink, the separate DL TCI state may be applied to a physical downlink shared channel (PDSCH)/a demodulation reference signal (DMRS) and a physical downlink control channel (PDCCH)/a demodulation reference signal (DMRS), as well as some downlink reference signals of a terminal. In a case where the network device indicates a separate UL TCI state for uplink, the separate UL TCI state may be applied to a physical uplink shared channel (PUSCH)/a demodulation reference signal (DMRS) and a physical uplink control channel (PUCCH)/a demodulation reference signal (DMRS), as well as some uplink reference signals of the terminal. In a case where the network device indicates a joint TCI state, the joint TCI state may be applied to the PDSCH/DMRS and the PDCCH/DMRS, as well as the some downlink reference signals of the terminal, and the PUSCH/DMRS and the PUCCH/DMRS, as well as the some uplink reference signals of the terminal.

In order to reduce signaling overhead of a medium-access-control control element (MAC CE), in a case where the terminal has a plurality of serving cells, the plurality of serving cells may be configured as at least one component carrier (CC) list. Then, for the plurality of serving cells belonging to one CC list, one MAC CE may be used to activate or update a corresponding TCI state. However, a serving cell may be configured as a single transmission reception point (S-TRP) transmission or a multi-transmission reception point (M-TRP) transmission.

For the serving cell configured as the M-TRP transmission, the serving cell may be configured based on single downlink control information (S-DCI) or based on multi-downlink control information (M-DCI). It is currently unclear how to configure the CC list of a serving cell for S-DCI indicator based M-TRP transmission and a serving cell for M-DCI indicator based M-TRP transmission.

### SUMMARY

In order to overcome problems existing in related technologies, the present disclosure provides a method and an apparatus for determining a transmission configuration indicator (TCI) state, and a storage medium.

According to a first aspect of the embodiments of the present disclosure, there is provided a method for determining a transmission configuration indicator (TCI) state, performed by a terminal. The method includes: receiving configuration information sent by a network device, in which, the configuration information is configured to configure a component carrier list; in which, the component carrier list includes at least one serving cell, and the at least one serving cell includes a first serving cell for single transmission reception point (S-DCI) indicator based multi-transmission reception point (M-TRP) transmission, and/or a second serving cell for multi-downlink control information (M-DCI) indicator based M-TRP transmission; and receiving a medium-access-control control element (MAC CE) signaling, in which, the MAC CE signaling is configured to activate a unified TCI state of the first serving cell and/or the second serving cell.

According to a second aspect of the embodiments of the present disclosure, there is provided a method for determining a TCI state, performed by a network device. The method includes: sending configuration information, in which, the configuration information is configured to configure a component carrier list; in which, the component carrier list includes at least one serving cell, and the at least one serving cell includes a first serving cell for S-DCI indicator based M-TRP transmission, and/or a second serving cell for M-DCI indicator based M-TRP transmission; and sending a MAC CE signaling, in which, the MAC CE signaling is configured to activate a unified TCI state of the first serving cell and/or the second serving cell.

According to a third aspect of the embodiments of the present disclosure, there is provided an apparatus for determining a transmission configuration indicator (TCI) state. The apparatus includes: a receiving unit, configured to receive configuration information sent by a network device, in which, the configuration information is configured to configure a component carrier list, and to receive a MAC CE signaling, in which, the MAC CE signaling is configured to activate a unified TCI state of a first serving cell and/or a second serving cell; in which, the component carrier list includes at least one serving cell, and the at least one serving cell includes the first serving cell for S-DCI indicator based M-TRP transmission, and/or the second serving cell for M-DCI indicator based M-TRP transmission.

According to a fourth aspect of the embodiments of the present disclosure, there is provided an apparatus for determining a transmission configuration indicator (TCI) state. The apparatus includes: a sending unit, configured to send configuration information, in which the configuration information is configured to configure a component carrier list, and to send a MAC CE signaling, in which, the MAC CE signaling is configured to activate a unified TCI state of a first serving cell and/or a second serving cell; in which, the component carrier list includes at least one serving cell, and the at least one serving cell includes the first serving cell for S-DCI indicator based M-TRP transmission, and/or the second serving cell for M-DCI indicator based M-TRP transmission.

The technical solution provided by the embodiments of the present disclosure may include the following beneficial effects. Configuration of the component carrier list is completed by means of the configuration information. The component carrier list includes the at least one serving cell, and the at least one serving cell includes the first serving cell for S-DCI indicator based M-TRP transmission, and/or the second serving cell for M-DCI indicator based M-TRP transmission. On this basis, activation or update of the unified transmission configuration indicator state of the first serving cell and/or the second serving cell may realized by means of the MAC CE signaling.

It should be understood that the foregoing general description and the following detailed description are illustrative and explanatory only and are not to limit the embodiments of the present disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a schematic structural diagram of a wireless communication system.
FIG. 2 is a flowchart illustrating a method for determining a transmission configuration indicator (TCI) state according to an illustrative embodiment.
FIG. 3 is a flowchart illustrating a method for determining a unified TCI state based on a first MAC CE singling according to an illustrative embodiment.
FIG. 4 is a flowchart illustrating a method for determining a unified TCI state based on a first MAC CE singling according to an illustrative embodiment.
FIG. 5 is a flowchart illustrating a method for determining a unified TCI state based on a second MAC CE singling according to an illustrative embodiment.
FIG. 6 is a flowchart illustrating a method for determining a unified TCI state based on a second MAC CE singling according to an illustrative embodiment.
FIG. 7 is a flowchart illustrating a method for determining a TCI state according to an illustrative embodiment.
FIG. 8 is a flowchart illustrating a method for sending an indication information according to an illustrative embodiment.
FIG. 9 is a block diagram illustrating an apparatus for determining a TCI state according to an illustrative embodiment.
FIG. 10 is a block diagram illustrating an apparatus for determining a TCI state according to an illustrative embodiment.
FIG. 11 is a block diagram illustrating a device for determining a TCI state according to an illustrative embodiment.
FIG. 12 is a block diagram illustrating a device for determining a TCI state according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure.

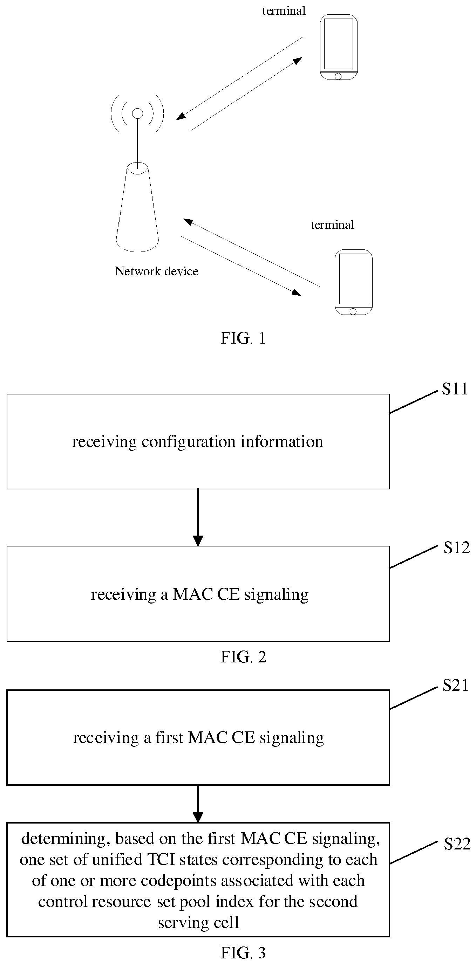

It may be understood that a communication system shown in FIG. 1 is only for schematic illustration. The wireless communication system may also include other network devices, such as core network devices, wireless relay devices, and wireless backhaul devices, which are not shown in FIG 1. The number of network devices and the number of terminals included in the wireless communication system are not limited in the embodiments of the present disclosure.

It may be further understood that the wireless communication system in the embodiments of the present disclosure is a network that provides a wireless communication function. The wireless communication system may employ different communication technologies, such as code division plurality of access (CDMA), wideband code division plurality of access (WCDMA), time division plurality of access (TDMA), frequency division plurality of access (FDMA), orthogonal frequency-division plurality of access (OFDMA), single carrier frequency division plurality of access (SC-FDMA), and carrier sense plurality of access with collision avoidance. The network may be divided into a 2nd generation (2G) network, a 3G network, a 4G network, or a future evolution network, such as a 5G network, which may also be referred to as a new radio (NR) network, according to the capacity, rate, delay and other factors of different networks. For ease of description, a wireless communication network will be sometimes abbreviated as a network in the present disclosure.

Further, the network device involved in the present disclosure may also be referred to as a radio access network device. The radio access network device may be a base station, an evolved node B, a home base station, an access point (AP) in a wireless fidelity (WIFI) system, a wireless relay node, a wireless backhaul node, a transmission point (TP), a transmission and reception point (TRP), or the like, or may also be a gNB in a NR system, or may also be a component or a part of a device that constitutes a base station, etc. It is to be understood that the specific technology and specific device form adopted by the network device are not limited in the embodiments of the present disclosure. In the present disclosure, the network device may provide communication coverage for a particular geographic area and may communicate with the terminal located within the coverage area (cell). The network device may also be a vehicle-mounted device when it is used in a vehicle to everything (V2X) communication system.

Further, the terminal involved in the present disclosure, which may also be referred to as a terminal device, a user equipment (UE), a mobile station (MS), a mobile terminal (MT), etc., is a device that provides voice and/or data connectivity to a user. For example, the terminal may be a handheld device with a wireless connection function, a vehicle-mounted device, or the like. At present, some examples of the terminal are a mobile phone, a customer premise equipment (CPE), a pocket personal computer (PPC), a palmtop computer, a personal digital assistant (PDA), a notebook computer, a tablet computer, a wearable device, a vehicle-mounted device, or the like. In addition, the terminal device may also be vehicle-mounted device when it is used in a vehicle to everything (V2X) communication system. It is to be understood that the specific technology and specific device form adopted by the terminal are not limited in the embodiments of the present disclosure.

In new radio (NR), for example, in a case where a communication frequency band is in a frequency range 2, a high-frequency channel may attenuate quickly, and beam-based transmission and reception are required to ensure coverage.

At present, in order to reduce signaling overhead, utilization of a unified transmission configuration indicator (unified TCI) state is introduced. The unified TCI state may include a joint unified TCI state for uplink and downlink, to perform joint indication for uplink and downlink. Alternatively, the unified TCI state may include a separate downlink TCI state (separate DL TCI state) and a separate uplink TCI state (separate UL TCI state), to indicate quasi co-location (QCL) parameters for uplink and downlink, respectively.

For example, in a case where a network device indicates a separate DL TCI state for downlink, the TCI state (unified TCI state) may be applied to a physical downlink shared channel (PDSCH)/a demodulation reference signal (DMRS) and a physical downlink control channel (PDCCH)/a demodulation reference signal (DMRS), as well as some downlink reference signals of a terminal. In a case where the network device indicates a separate UL TCI state for uplink, the unified TCI state may be applied to a physical uplink shared channel (PUSCH)/a demodulation reference signal (DMRS) and a physical uplink control channel (PUCCH)/a demodulation reference signal (DMRS), as well as some uplink reference signals of the terminal. In a case where the network device indicates a joint TCI state, the joint TCI state may be applied to the PDSCH/DMRS and the PDCCH/DMRS, as well as the some downlink reference signals of the terminal, and the PUSCH/DMRS and the PUCCH/DMRS, as well as the some uplink reference signals of the terminal.

In order to reduce signaling overhead of a medium-access-control control element (MAC CE), in a case where the terminal has a plurality of serving cells, the plurality of serving cells may be configured as at least one component carrier (CC) list. Then, for the plurality of serving cells belonging to one CC list, one MAC CE may be used to activate or update a corresponding TCI state. However, a serving cell may be configured as a single transmission reception point (S-TRP) transmission or a multi-transmission reception point (M-TRP) transmission.

For the serving cell configured as the M-TRP transmission, the serving cell may be configured based on single downlink control information (S-DCI) or based on multi-downlink control information (M-DCI). It is currently unclear how to configure the CC list of a serving cell for S-DCI indicator based M-TRP transmission and a serving cell for M-DCI indicator based M-TRP transmission.

For convenience of description below in the present disclosure, the serving cell for S-DCI indicator based M-TRP transmission is referred to as a first serving cell, and the serving cell for M-DCI indicator based M-TRP transmission is referred to as a second serving cell.

FIG. 2 is a flowchart illustrating a method for determining a TCI state according to an illustrative embodiment. As shown in FIG. 2, the method may include a step S11 and a step S12.

At step S11, configuration information is received.

At step S12, a MAC CE signaling is received.

In an embodiment of the present disclosure, the configuration information is configured to configure a CC list. The MAC CE signaling is configured to activate a unified TCI state of the first serving cell and/or the second serving cell.

The unified TCI state includes at least one of a joint TCI state, a DL TCI state, or a UL TCI state.

It is understandable that the unified TCI state involved in embodiments of the present disclosure may be the joint TCI state, or may be the DL TCI state, or may be the UL TCI state. Or the unified TCI state may include the joint TCI state and the DL TCI state. Or the unified TCI state may include the DL TCI state and the UL TCI state.

According to the method provided in this embodiment of the present disclosure, the terminal may complete configuration of the CC list by means of receiving the configuration information. Furthermore, the terminal may achieve activation or update of the unified TCI state of the first serving cell and/or the second serving cell by means of receiving the MAC CE signaling.

In the method for determining the TCI state provided by an embodiment of the present disclosure, the CC list configured by the terminal based on the configuration information may include at least one serving cell. The at least one serving cell included in the CC list may include a first serving cell for S-DCI indicator based M-TRP transmission and/or a second serving cell for M-DCI indicator based M-TRP transmission.

In the method for determining the TCI state provided by an embodiment of the present disclosure, the terminal needs to determine a CC list, which includes the first serving cell for S-DCI indicator based M-TRP transmission and/or the second serving cell for M-DCI indicator based M-TRP transmission.

In an implementation of the method for determining the TCI state provided by embodiments of the present disclosure, in response to determining that at least one of PDCCH/PDSCH/PUCCH/PUSCH of a certain serving cell is configured with single frequency network (SFN) transmission, or repetition transmission, or space division multiplexing (SDM) transmission based on different TCI states, the serving cell is determined to be the first serving cell for S-DCI indicator based M-TRP transmission.

The SFN transmission includes performing transmission by using a plurality of TCI states based on the same time domain resource, the same frequency domain resource and the same DMRS resource.

The repetition transmission includes frequency-division multiplexing (FDM) transmission or time-division multiplexing (TDM) transmission.

The FDM transmission includes perform transmission by using different TCI states based on the same time domain resource and different frequency domain resources.

The TDM transmission includes perform transmission by using different TCI states based on the same frequency domain resource and different time domain resources.

The SDM transmission includes transmission based on a plurality of DMRS port groups, which is understandable as performing transmission by using different TCI states based on the same time domain resource and the same frequency domain resource and different DMRS port groups.

In an implementation of the method for determining the TCI state provided by embodiments of the present disclosure, in response to determining that control resource set pool indexes (CORESETPoolindex) corresponding to at least two control resource sets (ControlResourceSet, CORESET) of a certain serving cell are different, the serving cell is determined to be the second serving cell for M-DCI indicator based M-TRP transmission.

In an example, for a certain serving cell, among a plurality of CORESETs configured by the terminal, a CORESETPoolIndex of at least one CORESET is configured as 1, and a CORESETPoolIndex of at least another CORESET is not configured as any value or is configured as 0, if not configured as any value, it defaults to 0, then the serving cell is determined to be the second serving cell for M-DCI indicator based M-TRP transmission.

In the method for determining the TCI state provided by an embodiment of the present disclosure, respective serving cells configured in one CC list may be configured with the same DCI indication mode. For example, the plurality of serving cells in the one CC list may all be first serving cells. Or, for another example, the plurality of serving cells in the one CC list may all be second serving cells.

In the method for determining the TCI state provided by an embodiment of the present disclosure, respective serving cells configured in one CC list may be configured with different DCI indication modes. For example, the one CC list may include at least one first serving cell and at least one second serving cell.

One CC list includes both the first serving cell and the second serving cell. By means of a process of activating the TCI state, it is determined that a serving cell applicable to the activated TCI state includes the first serving cell and/or the second serving cell.

For example, any second serving cell for M-DCI indicator based M-TRP transmission may include at least two CORESETs. For the at least two CORESETs included in the second serving cell, there are at least two CORESETs corresponding to different CORESETPoolIndexes. For example, a CORESETPoolIndex of one CORESET may be configured as 1, and a CORESETPoolIndex of another CORESET may be configured as 0. For another example, the CORESETPoolIndex of one CORESET may be configured as 1, and the CORESETPoolIndex of another CORESET may not be configured as any value.

In embodiments of the present disclosure, different MAC CE signalings for activating the unified TCI state in different manners may be configured. For convenience of description below, in the present disclosure, different MAC CE signalings for activating the unified TCI state in different manner may be referred to be as a first MAC CE signaling and a second MAC CE signaling, respectively.

In the method for determining the TCI state provided by an embodiment of the present disclosure, the first MAC CE signaling includes at least one CORESETPoolIndex, and the first MAC CE signaling is configured to activate a unified TCI state corresponding to one or more codepoints associated with the at least one CORESETPoolIndex. For each individual CORESETPoolIndex, each codepoint may correspond to one set of unified TCI states.

In an embodiment of the present disclosure, one set of unified TCI states may include a joint TCI state, or include at least one of a downlink TCI state or an uplink TCI state. In an example, each codepoint corresponding to one set of unified TCI states may include, for example, each codepoint corresponding to one joint TCI state, or for another example, each codepoint corresponding to at least one of the downlink TCI state or the uplink TCI state.

Different MAC CEs may be used to activate unified TCI states of codepoints corresponding to different CORESETPoolIndexes for the plurality of serving cells in the CC list. Or one MAC CE may be used to activate the unified TCI states of the codepoints corresponding to different CORESETPoolIndexes for the plurality of serving cells in the CC list.

It is understandable that in an embodiment of the present disclosure, an analogous MAC CE for M-DCI based M-TRP is used to activate a TCI state of the plurality of serving cells in the CC list. The activated TCI state may be applicable for the serving cell for M-DCI based M-TRP (the second serving cell), and also to the serving cell for S-DCI based M-TRP (the first serving cell).

In an implementation, when the terminal receives the first MAC CE signaling, a set of unified TCI states corresponding to the second serving cell may be determined in the following manner.

FIG. 3 is a flowchart illustrating a method for determining a unified TCI state based on a first MAC CE singling according to an illustrative embodiment. As shown in FIG. 3, the method includes the following steps.

At step S21, a first MAC CE signaling is received.

At step S22, one set of unified TCI states corresponding to each of one or more codepoints associated with each CORESETPoolIndex for the second serving cell is determined based on the first MAC CE signaling.

In an embodiment, the first MAC CE activates one or more codepoints corresponding to each CORESETPoolIndex for the second serving cell, and for the one or more codepoints corresponding to each individual CORESETPoolIndex, each codepoint may correspond to one set of unified TCI states. The one set of unified TCI states includes a joint TCI state, or includes at least one of a downlink TCI state and an uplink TCI state.

It is understandable that a codepoint in embodiments of the present disclosure may include a codepoint corresponding to a TCI field in a DCI. Regarding each individual CORESETPoolIndex for the second serving cell, the first MAC CE signaling activates the unified TCI state corresponding to each of the one or more codepoints, and a TCI state corresponding to which codepoint the terminal is finally to be adopted is determined based on a codepoint corresponding to a TCI field in a downlink control information (DCI) signaling sent by a network device. That is, the terminal may determine the unified TCI state that is finally to be adopted according to a codepoint corresponding to a TCI field in a DCI carried by a PDCCH sent based on the CORESET associated with the CORESETPoolIndex, as well as according to the unified TCI state corresponding to the codepoint associated with the CORESETPoolIndex and activated by the first MAC CE signaling.

Since the first MAC CE signaling activates the unified TCI state corresponding to the one or more codepoints for each individual CORESETPoolIndex, the unified TCI state corresponding to the one or more codepoints associated with each individual CORESETPoolIndex for the second serving cell may be directly determined based on the first MAC CE signaling.

In an embodiment of the present disclosure, the first MAC CE signaling is used to activate one set of unified TCI states corresponding to each of one or more codepoints associated with each individual CORESETPoolIndex for the second serving cell. For example, one first MAC CE signaling (represented by MAC CE#1 for example) may be used to activate one set of unified TCI states corresponding to each of the one or more codepoints associated with one CORESETPoolIndex (represented by CORESETPoolIndex#0 for example), that is, MAC CE#1 includes an identifier of CORESETPoolIndex#0. Another first MAC CE signaling (represented by MAC CE#2 for example) may be used to activate one set of unified TCI states corresponding to each of one or more codepoints associated with another CORESETPoolIndex (represented by CORESETPoolIndex#1 for example), that is, MAC CE#2 includes an identifier of CORESETPoolIndex# 1. The one set of unified TCI states may include the joint TCI state, or include at least one of the downlink TCI state and the uplink TCI state.

In an embodiment of the present disclosure, the first MAC CE signaling is used to activate one set of unified TCI states corresponding to each of one or more codepoints associated with each CORESETPoolIndex for the second serving cell. For example, one first MAC CE signaling (represented by MAC CE#3 for example) may be used to activate one set of unified TCI states corresponding to each of one or more codepoints associated with one CORESETPoolIndex (represented by CORESETPoolIndex#0 for example), and activate one set of unified TCI states corresponding to each of one or more codepoints associated with another CORESETPoolIndex (represented by CORESETPoolIndex#1 for example), that is, MAC CE#3 includes identifiers of CORESETPoolIndex#0 and CORESETPoolIndex#1. The one set of unified TCI states may include the joint TCI state, or include at least one of the downlink TCI state and the uplink TCI state.

In another implementation, when the terminal receives the first MAC CE signaling, a set of unified TCI states corresponding to the first serving cell may be determined in the following manner.

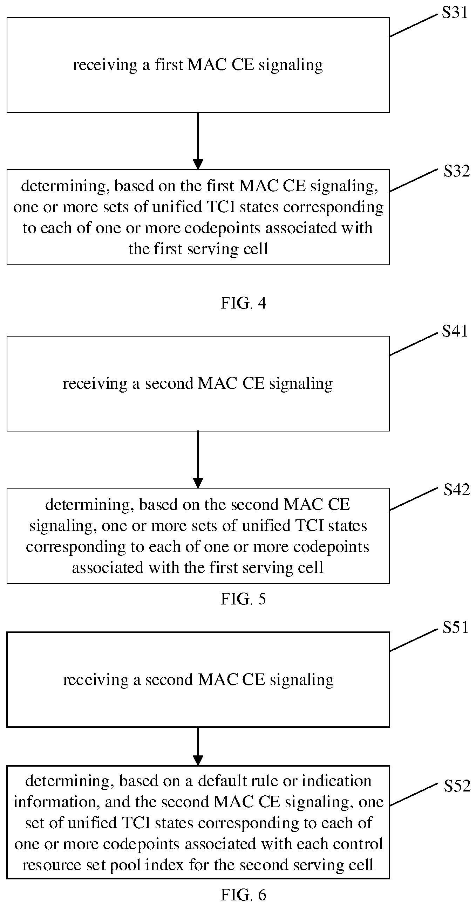

FIG. 4 is a flowchart illustrating a method for determining a unified TCI state based on a first MAC CE singling according to an illustrative embodiment. As shown in FIG. 4, the method includes the following steps.

At step S31, a first MAC CE signaling is received.

At step S32, one or more sets of unified TCI states corresponding to each of one or more codepoints associated with the first serving cell are determined based on the first MAC CE signaling.

In an embodiment of the present disclosure, the first MAC CE signaling activates one or more codepoints corresponding to at least one CORESETPoolIndex. The first MAC CE signaling may activate one or more codepoints for each CORESETPoolIndex. Regarding the one or more codepoints for each individual CORESETPoolIndex, each codepoint may correspond to one set of unified TCI states.

In an example of the present disclosure, the first MAC CE signaling may include a plurality of MAC CE signalings. For example, the first MAC CE signaling includes MAC CE#1 and MAC CE#2. Different MAC CE signalings in the plurality of MAC CE signalings may respectively activate one or more codepoints corresponding to each CORESETPoolIndex. The one or more codepoints may be one or more codepoints in a TCI field of a DCI. It is understandable that respective different MAC CE signalings in the first MAC CE signaling in an embodiment of the present disclosure may activate the unified TCI state corresponding to one or more codepoints in the TCI field of the DCI for different CORESETPoolIndexes. It is also understandable that the same codepoint in the TCI fields of the DCI may correspond to a plurality of sets of different unified TCI states, and each set of unified TCI states corresponds to one CORESETPoolIndex. For convenience of description, the codepoint corresponding to the plurality of sets of different unified TCI states in the one or more codepoints corresponding to the first serving cell may be referred to as a first codepoint.

In an embodiment, each of different first MAC CE signalings may activate one different set of unified TCI states corresponding to the same first codepoint in the TCI field of the DCI. For example, MAC CE#1 activates unified TCI state#1 corresponding to codepoint#0 in the TCI field of the DCI for CORESETPoolIndex#0, and MAC CE#2 activates unified TCI state#2 corresponding to codepoint#0 in the TCI field of the DCI for CORESETPoolIndex#1. Then for the first serving cell, the terminal determines that the unified TCI state corresponding to codepoint#0 includes unified TCI state#1 and unified TCI state#2.

In another embodiment, for different first MAC CE signalings, one of the first MAC CE signalings may activate one set of unified TCI states corresponding to the first codepoint in the TCI field of the DCI, while another one of the first MAC CE signalings does not activate any unified TCI state for the first codepoint in the TCI field of the DCI. For example, MAC CE#1 activates unified TCI state#9 corresponding to codepoint#7 in the TCI field of the DCI for CORESETPoolIndex#0, and MAC CE#2 does not activate the corresponding unified TCI state for codepoint#7 in the TCI field of the DCI for CORESETPoolIndex#1. Then for the first serving cell, the terminal determines that the unified TCI state corresponding to codepoint#7 includes unified TCI state#9.

In another embodiment, one first MAC CE signaling may activate two different sets of unified TCI states corresponding to the same first codepoint in the TCI field of the DCI. For example, MAC CE#3 activates unified TCI state#1 corresponding to codepoint#0 in the TCI field of the DCI for CORESETPoolIndex#0, and activates unified TCI state#2 corresponding to codepoint#0 in the TCI field of the DCI for CORESETPoolIndex#1. Then for the first serving cell, the terminal determines that the unified TCI state corresponding to codepoint#0 includes unified TCI state#1 and unified TCI state#2.

In another embodiment, one first MAC CE signaling may activate one set of unified TCI states corresponding to one first codepoint in the TCI field of the DCI. For example, MAC CE#3 activates unified TCI state#9 corresponding to codepoint#7 in the TCI field of the DCI for CORESETPoolIndex#0, and does not activate the corresponding unified TCI state for codepoint#7 in the TCI field of the DCI for CORESETPoolIndex#1. Then for the first serving cell, the terminal determines that the unified TCI state corresponding to codepoint#7 includes unified TCI state#9.

The one set of unified TCI states may include a joint TCI state, or include at least one of a downlink TCI state or an uplink TCI state.

In an example, in a case where the unified TCI state includes the joint TCI state, determining the one or more sets of unified TCI states corresponding to each of the one or more codepoints associated with the first serving cell based on the first MAC CE signaling may be replaced by determining one or more sets of joint TCI states corresponding to each of the one or more codepoints associated with the first serving cell based on the first MAC CE signaling.

In another example, in a case where the unified TCI state includes a separate TCI state, determining the one or more sets of unified TCI states corresponding to each of the one or more codepoints associated with the first serving cell based on the first MAC CE signaling may be replaced by determining at least one of the one or more sets of DL TCI states or the one or more sets of UL TCI states corresponding to each of the one or more codepoints associated with the first serving cell based on the first MAC CE signaling.

In another implementation of the method for determining the TCI state provided by an embodiment of the present disclosure, a MAC CE signaling for activating the unified TCI state may be a second MAC CE signaling. The second MAC CE signaling is configured to activate a unified TCI state corresponding to one or more codepoints, and the one or more codepoints includes at least one codepoint corresponding to a plurality of sets of activated unified TCI states.

For example, the codepoints activated by the second MAC CE signaling include codepoint#0 and codepoint#1.

The codepoint#0 corresponds to two sets of unified TCI states, which are represented by unified TCI state#1 and unified TCI state#2 for example. The unified TCI state#1 is located at a bit position of a first unified TCI state corresponding to codepoint#0, and the unified TCI state#2 is located at a bit position of a second unified TCI state corresponding to codepoint#0.

The codepoint #1 corresponds to one set of unified TCI states, which is represented by unified TCI state #3 for example. The unified TCI state #3 is located at a bit position of a first unified TCI state corresponding to codepoint #1.

An implementation solution of activating the unified TCI state corresponding to the one or more codepoints based on the second MAC CE signaling may be understood as a solution of activating the TCI state using a MAC CE for S-DCI based M-TRP. That is, the second MAC CE signaling may not include an identifier of CORESETPoolIndex.

In an implementation, when the terminal receives the second MAC CE signaling, a set of unified TCI states corresponding to the first serving cell may be determined in the following manner.

FIG. 5 is a flowchart illustrating a method for determining a unified TCI state based on a second MAC CE singling according to an illustrative embodiment. As shown in FIG. 5, the method includes the following steps.

At step S41, a second MAC CE signaling is received.

At step S42, one or more sets of unified TCI states corresponding to each of one or more codepoints associated with the first serving cell is determined based on the second MAC CE signaling.

In the method provided by this embodiment of the present disclosure, regarding a first serving cell for S-DCI indicator based M-TRP transmission, the activated unified TCI state may be determined based on one or more codepoints activated by the second MAC CE signaling. That is, the terminal may directly use the TCI state corresponding to each codepoint activated by the second MAC CE signaling.

In an embodiment of the present disclosure, the second MAC CE signaling has not yet specified a correspondence between the unified TCI state and the CORESETPoolIndex, therefore, the unified TCI state corresponding to each CORESETPoolIndex applicable for the second serving cell cannot be determined in the activated unified TCI state through the second MAC CE signaling. In this regard, for one or more sets of TCI states corresponding to each codepoint activated by a MAC CE (second MAC CE), it is necessary to further determine a correspondence between each CORESETPoolIndex for the second serving cell and one or more sets of activated TCI states.

FIG. 6 is a flowchart illustrating a method for determining a unified TCI state based on a second MAC CE singling according to an illustrative embodiment. As shown in FIG. 6, the method includes the following steps.

At step S51, a second MAC CE signaling is received.

At step S52, one set of unified TCI states corresponding to each of one or more codepoints associated with each CORESETPoolIndex for the second serving cell is determined based on a default rule or indication information, and the second MAC CE signaling.

According to the method provided by this embodiment of the present disclosure, the terminal may further determine a correspondence between a specified unified TCI state and CORESETPoolIndex based on the default rule or the indication information on the basis of activating one or more sets of unified TCI states corresponding to each of one or more codepoints respectively by the second MAC CE signaling, and thereby determining one set of unified TCI states corresponding to each of one or more codepoints associated with each CORESETPoolIndex for the second serving cell.

In an embodiment of the present disclosure, when determining one set of unified TCI states corresponding to each of one or more codepoints associated with each control resource set pool index for the second serving cell, different default rules and/or indication information may be used based on the number of unified TCI states corresponding to the codepoint activated by the second MAC CE signaling to determine one set of unified TCI states corresponding to each of one or more codepoints associated with each CORESETPoolIndex for the second serving cell.

For the convenience of description, a codepoint corresponding to a plurality of sets of unified TCI states activated by the second MAC CE is referred to as a first codepoint, and a codepoint corresponding to one set of unified TCI states activated by the second MAC CE is referred to as a second codepoint.

In an embodiment, when a codepoint activated by the second MAC CE signaling includes the first codepoint corresponding to the plurality of sets of unified TCI states, one set of unified TCI states corresponding to each of one or more codepoints associated with each CORESETPoolIndex for the second serving cell is determined based on the default rule and the second MAC CE signaling. The default rule adopted by the terminal may include that: a plurality of CORESETPoolIndexes are mapped one-to-one with the plurality of sets of unified TCI states corresponding to the first codepoint.

In an implementation, the plurality of CORESETPoolIndexes may include, for example, a CORESETPoolIndex with an index value of 0 (represented by CORESETPoolIndex#0 for example) and a CORESETPoolIndex with an index value of 1 (represented by CORESETPoolIndex#1 for example). The first codepoint is codepoint#0, and the unified TCI state activated by the second MAC CE signaling for codepoint#0 may include, for example, unified TCI state#1 and unified TCI state#2. At this case, the default rule may indicate that CORESETPoolIndex#0 uses the unified TCI state#1 corresponding to the codepoint#0, and CORESETPoolIndex#1 uses the unified TCI state#2 corresponding to the codepoint#0. Then for the terminal, it may be determined according to the default rule that CORESETPoolIndex#0 uses the unified TCI state#1 corresponding to the codepoint t#0, and CORESETPoolIndex#1 uses the unified TCI state#2 corresponding to the codepoint#0.

Of course, the default rule may also be that CORESETPoolIndex#0 uses the unified TCI state#2 corresponding to the codepoint#0, and CORESETPoolIndex#1 uses the unified TCI state#1 corresponding to the codepoint#0. At this case, if the second MAC CE signaling activates the unified TCI state#1 and the unified TCI state#2 corresponding to the first codepoint (e represented by codepoint#0 for example). Then for the terminal, it may be determined according to the default rule that CORESETPoolIndex#0 uses the unified TCI state#2 corresponding to the codepoint#0, and that CORESETPoolIndex#1 uses the unified TCI state#1 corresponding to the codepoint#0.

For example, in a case where the codepoint activated by the second MAC CE signaling includes the first codepoint corresponding to the plurality of sets of unified TCI states, the unified TCI state is determined based on the indication information and the second MAC CE signaling.

The indication information is configured to indicate a mapping relationship between the plurality of sets of unified TCI states corresponding to the plurality of first codepoints and CORESETPoolIndexes, or the indication information is configured to indicate a mapping relationship between the plurality of sets of unified TCI states corresponding to each first codepoint and CORESETPoolIndexes.

The indication information may be an RRC signaling.

In an example, the mapping relationship between the plurality of sets of unified TCI states corresponding to the plurality of first codepoints and the CORESETPoolIndexes may be indicated through the RRC signaling, for example, the RRC signaling indicates the mapping relationship between the plurality of sets of unified TCI states corresponding to the plurality of first codepoints and the CORESETPoolIndexes.

In an example, the RRC signaling indicates the mapping relationship between the plurality of unified TCI states corresponding to the plurality of first codepoints and CORESETPoolIndexes, for example, indicates that a CORESETPoolIndex with an index value of 0 (represented by CORESETPoolIndex#0 for example) corresponds to a first unified TCI state of the first codepoint, and a CORESETPoolIndex with an index value of 1 (represented by CORESETPoolIndex# 1 for example) corresponds to a second unified TCI state of the first codepoint. When the second MAC CE signaling activates the unified TCI state#1 and unified TCI state#2 corresponding to the first codepoint codepoint#0, where the unified TCI state#1 is at a bit position of the first unified TCI state corresponding to the codepoint#0, and the unified TCI state#2 is at a bit position of the second unified TCI state corresponding to the codepoint#0, the terminal may determine, according to an indication of the indication information, that the CORESETPoolIndex with the index value of 0 (represented by CORESETPoolIndex#0 for example) corresponds to the first unified TCI state (represented by unified TCI state#1 for example) of the first codepoint codepoint#0, and determine that the CORESETPoolIndex with an index value of 1 (represented by CORESETPoolIndex#1 for example) corresponds to the second unified TCI state (represented by unified TCI state#2 for example) of the first codepoint codepoint#0. When the second MAC CE signaling activates unified TCI state#3 and unified TCI state#4 corresponding to the first codepoint codepoint#1, where the unified TCI state#3 is at a bit position of a first unified TCI state corresponding to the codepoint#1, and the unified TCI state#4 is at a bit position of a second unified TCI state corresponding to the codepoint#1, the terminal may determine, according to an indication of the indication information, that the CORESETPoolIndex with an index value of 0 (represented by CORESETPoolIndex#0 for example) corresponds to the first unified TCI state (represented by unified TCI state#3 for example) of the first codepoint codepoint#1 by, and determine that the CORESETPoolIndex with an index value of 1 (represented by CORESETPoolIndex#1 for example) corresponds to the second unified TCI state (represented by unified TCI state#4 for example) of the first codepoint codepoint#1. That is, the mapping relationship indicated by the RRC signaling is applicable to all first codepoints, that is, for all first codepoints, CORESETPoolIndex#0 corresponds to the first unified TCI state of the first codepoint, and CORESETPoolIndex#1 corresponds to the second unified TCI state of the first codepoint.

In another example, the RRC signaling indicates a correspondence between the plurality of sets of unified TCI states corresponding to each of the plurality of first codepoints and CORESETPoolIndexes. For example, for the first codepoint codepoint#0, it is indicated that the CORESETPoolIndex with an index value of 0 (represented by CORESETPoolIndex#0 for example) corresponds to the first unified TCI state of the first codepoint codepoint#0, and the CORESETPoolIndex with an index value of 1 (represented by CORESETPoolIndex#1 for example) corresponds to the second unified TCI state of the first codepoint codepoint#0. And for the first codepoint codepoint#1, it is indicated that the CORESETPoolIndex with an index value of 0 (represented by CORESETPoolIndex#0 for example) corresponds to the second unified TCI state of the first codepoint codepoint#1, and the CORESETPoolIndex with an index value of 1 (represented by CORESETPoolIndex#1 for example) corresponds to the first unified TCI state of the first codepoint codepoint#1. When the second MAC CE signaling activates the unified TCI state#1 and unified TCI state#2 corresponding to the first codepoint codepoint#0, where the unified TCI state#1 is at a bit position of the first unified TCI state corresponding to the codepoint#0, and the unified TCI state#2 is at a bit position of the second unified TCI state corresponding to the codepoint#0, the terminal may determine, according to an indication of the indication information, that the CORESETPoolIndex with an index value of 0 (represented by CORESETPoolIndex#0 for example) corresponds to the first unified TCI state (represented by unified TCI state#1 for example) of the first codepoint codepoint#0, and the CORESETPoolIndex with an index value of 1 (represented by CORESETPoolIndex#1 for example) corresponds to the second unified TCI state (represented by unified TCI state#2 for example) of the first codepoint codepoint#0. When the second MAC CE signaling activates unified TCI state#3 and unified TCI state#4 corresponding to the first codepoint codepoint#1, where the unified TCI state#3 is at a bit position of the first unified TCI state corresponding to the codepoint#1, and represented unified TCI state#4 is at a bit position of the second unified TCI state corresponding to the codepoint#1, the terminal may determine, according to an indication of the indication information, that the CORESETPoolIndex with an index value of 0 (represented by CORESETPoolIndex#0 for example) corresponds to the second unified TCI state (represented by unified TCI state#4 for example) of the first codepoint codepoint#1, and the CORESETPoolIndex with an index value of 1 (represented by CORESETPoolIndex#1 for example) corresponds to the first unified TCI state (represented by unified TCI state#3 for example) of the first codepoint codepoint#1. In other words, the RRC signaling may independently indicate the mapping relationship between the plurality of sets of unified TCI states and CORESETPoolIndexes for each individual first codepoint. That is, for the at least one first codepoint, the RRC signaling may indicate that CORESETPoolIndex#0 corresponds to the first unified TCI state of the first codepoint, and CORESETPoolIndex#1 corresponds to the second unified TCI state of the first codepoint. And for at least another first codepoint, the RRC signaling may indicate that CORESETPoolIndex#0 corresponds to the second unified TCI state of the first codepoint, and CORESETPoolIndex#1 corresponds to the first unified TCI state of the first codepoint.

The above-mentioned correspondence indicated by the RRC signaling may also be reversed. For example, the RRC signaling indicates that the CORESETPoolIndex with an index value of 0 (represented by CORESETPoolIndex#0 for example) corresponds to the second unified TCI state of the first codepoint, and the CORESETPoolIndex with an index value of 1 (represented by CORESETPoolIndex#1 for example) corresponds to the first unified TCI state of the first codepoint.

The indication information may be a MAC CE signaling.

In an example, the MAC CE signaling indicates a mapping relationship between a plurality of sets of unified TCI states corresponding to a plurality of first codepoints and CORESETPoolIndexes. For example, the MAC CE signaling indicates the mapping relationship between the plurality of sets of unified TCI states corresponding to the plurality of first codepoints and CORESETPoolIndexes.

For the embodiments of the present disclosure, the MAC CE signaling indicating the mapping relationship between the plurality of sets of unified TCI states corresponding to the plurality of first codepoints and CORESETPoolIndexes may be a MAC CE signaling for activating the unified TCI state. That is, the MAC CE signaling carrying the indication information and the MAC CE signaling for activating the unified TCI state may be the same MAC CE signaling. At this case, activation of the unified TCI state and indication of the mapping relationship may be completed through one MAC CE signaling.

In an example, the MAC CE signaling indicates the mapping relationship between the plurality of unified TCI states corresponding to the plurality of first codepoints and CORESETPoolIndexes, for example, indicates that a CORESETPoolIndex with an index value of 0 (represented by CORESETPoolIndex#0 for example) corresponds to a first unified TCI state of the first codepoint, and a CORESETPoolIndex with an index value of 1 (represented by CORESETPoolIndex#1 for example) corresponds to a second unified TCI state of the first codepoint. When the second MAC CE signaling activates the unified TCI state#1 and unified TCI state#2 corresponding to the first codepoint codepoint#0, where the unified TCI state#1 is at a bit position of the first unified TCI state corresponding to the codepoint#0, and the unified TCI state#2 is at a bit position of the second unified TCI state corresponding to the codepoint#0, the terminal may determine, according to an indication of the indication information, that the CORESETPoolIndex with the index value of 0 (represented by CORESETPoolIndex#0 for example) corresponds to the first unified TCI state (represented by unified TCI state#1 for example) of the first codepoint codepoint#0, and determine that the CORESETPoolIndex with an index value of 1 (represented by CORESETPoolIndex#1 for example) corresponds to the second unified TCI state (represented by unified TCI state#2 for example) of the first codepoint codepoint#0. When the second MAC CE signaling activates unified TCI state#3 and unified TCI state#4 corresponding to the first codepoint codepoint#1, where the unified TCI state#3 is at a bit position of a first unified TCI state corresponding to the codepoint#1, and the unified TCI state#4 is at a bit position of a second unified TCI state corresponding to the codepoint#1, the terminal may determine, according to an indication of the indication information, that the CORESETPoolIndex with an index value of 0 (represented by CORESETPoolIndex#0 for example) corresponds to the first unified TCI state (represented by unified TCI state#3 for example) of the first codepoint codepoint#1 by, and determine that the CORESETPoolIndex with an index value of 1 (represented by CORESETPoolIndex#1 for example) corresponds to the second unified TCI state (represented by unified TCI state#4 for example) of the first codepoint codepoint#1. That is, the mapping relationship indicated by the MAC CE signaling carrying the indication information is applicable to all first codepoints, that is, for all first codepoints, CORESETPoolIndex#0 corresponds to the first unified TCI state of the first codepoint, and CORESETPoolIndex#1 corresponds to the second unified TCI state of the first codepoint.

In another example, the MAC CE signaling indicates a correspondence between the plurality of sets of unified TCI states corresponding to each of the plurality of first codepoints and CORESETPoolIndexes. For example, for the first codepoint codepoint#0, it is indicated that the CORESETPoolIndex with an index value of 0 (represented by CORESETPoolIndex#0 for example) corresponds to the first unified TCI state of the first codepoint codepoint#0, and the CORESETPoolIndex with an index value of 1 (represented by CORESETPoolIndex#1 for example) corresponds to the second unified TCI state of the first codepoint codepoint#0. And for the first codepoint codepoint#1, it is indicated that the CORESETPoolIndex with an index value of 0 (represented by CORESETPoolIndex#0 for example) corresponds to the second unified TCI state of the first codepoint codepoint#1, and the CORESETPoolIndex with an index value of 1 (represented by CORESETPoolIndex#1 for example) corresponds to the first unified TCI state of the first codepoint codepoint#1. When the second MAC CE signaling activates the unified TCI state#1 and unified TCI state#2 corresponding to the first codepoint codepoint#0, where the unified TCI state#1 is at a bit position of the first unified TCI state corresponding to the codepoint#0, and the unified TCI state#2 is at a bit position of the second unified TCI state corresponding to the codepoint#0, the terminal may determine, according to an indication of the indication information, that the CORESETPoolIndex with an index value of 0 (represented by CORESETPoolIndex#0 for example) corresponds to the first unified TCI state (represented by unified TCI state#1 for example) of the first codepoint codepoint#0, and the CORESETPoolIndex with an index value of 1 (represented by CORESETPoolIndex#1 for example) corresponds to the second unified TCI state (represented by unified TCI state#2 for example) of the first codepoint codepoint#0. When the second MAC CE signaling activates unified TCI state#3 and unified TCI state#4 corresponding to the first codepoint codepoint#1, where the unified TCI state#3 is at a bit position of the first unified TCI state corresponding to the codepoint#1, and represented unified TCI state#4 is at a bit position of the second unified TCI state corresponding to the codepoint#1, the terminal may determine, according to an indication of the indication information, that the CORESETPoolIndex with an index value of 0 (represented by CORESETPoolIndex#0 for example) corresponds to the second unified TCI state (represented by unified TCI state#4 for example) of the first codepoint codepoint#1, and the CORESETPoolIndex with an index value of 1 (represented by CORESETPoolIndex#1 for example) corresponds to the first unified TCI state (represented by unified TCI state#3 for example) of the first codepoint codepoint#1. In other words, the MAC CE signaling carrying the indication information may independently indicate the mapping relationship between the plurality of sets of unified TCI states and CORESETPoolIndexes for each individual first codepoint. That is, for the at least one first codepoint, the MAC CE signaling may indicate that CORESETPoolIndex#0 corresponds to the first unified TCI state of the first codepoint, and CORESETPoolIndex#1 corresponds to the second unified TCI state of the first codepoint. And for at least another first codepoint, the MAC CE signaling may indicate that CORESETPoolIndex#0 corresponds to the second unified TCI state of the first codepoint, and CORESETPoolIndex#1 corresponds to the first unified TCI state of the first codepoint.

The above-mentioned correspondence indicated by the MAC CE signaling may also be reversed. For example, the MAC CE signaling indicates that the CORESETPoolIndex with an index value of 0 (represented by CORESETPoolIndex#0 for example) corresponds to the second unified TCI state of the first codepoint, and the CORESETPoolIndex with an index value of 1 (represented by CORESETPoolIndex#1 for example) corresponds to the first unified TCI state of the first codepoint.

It is noted that when there are a plurality of second serving cells, for a different second serving cell, the RRC signaling or MAC CE signaling may be used independently for indication. Furthermore, an indication manner adopted may be an implicit indication manner or an explicit indication manner.

In the above embodiment, the one set of unified TCI states may include a joint TCI state, or include at least one of a downlink TCI state or an uplink TCI state.

In another embodiment, when a codepoint activated by the second MAC CE signaling includes a second codepoint corresponding to one set of unified TCI states, one set of unified TCI states corresponding to each of one or more codepoints associated with each CORESETPoolIndex for the second serving cell is determined based on the default rules and the second MAC CE signaling. The default rule adopted by the terminal may include that: the one set of unified TCI states corresponds to a specified CORESETPoolIndex.

For example, the default rule may be that one set of unified TCI states activated by the second codepoint is specified as corresponding CORESETPoolIndex with an index value of 0 (represented by CORESETPoolIndex#0 for example). On this basis, the terminal determines, based on the default rule, that one set of unified TCI states activated by the second codepoint corresponds to CORESETPoolIndex with an index value of 0 (represented by CORESETPoolIndex#0 for example).

In an example, the plurality of CORESETPoolIndexes may include, for example, a CORESETPoolIndex with an index value of 0 (represented by CORESETPoolIndex#0 for example) and a CORESETPoolIndex with an index value of 1 (represented by CORESETPoolIndex#1 for example). For the second codepoint codepoint#0, the unified TCI state activated by the second MAC CE signaling for codepoint#0 may be, for example, unified TCI state#1. The default rule may indicate that CORESETPoolIndex#0 uses the unified TCI state#1 corresponding to the codepoint#0. That is, if the second MAC CE signaling activates the unified TCI state#1 corresponding to the second codepoint codepoint#0, then the terminal may be determine according to the default rule that CORESETPoolIndex#0 uses the unified TCI state#1 corresponding to the codepoint#0. Alternatively, the default rule may be that CORESETPoolIndex#1 uses the unified TCI state#1 corresponding to the codepoint#0. That is, if the second MAC CE signaling activates the unified TCI state#1 corresponding to the second codepoint codepoint#0, then the terminal may determine according to the default rule that CORESETPoolIndex#1 uses the unified TCI state#1 corresponding to the codepoint#0.

For example, in a case where the codepoint activated by the second MAC CE signaling includes a second codepoint corresponding to one set of unified TCI states, one set of unified TCI states corresponding to each of one or more codepoints corresponding to each CORESETPoolIndex for the second serving cell may be determined based on the indication information and the second MAC CE signaling.

The indication information is used to indicate that one set of unified TCI states corresponding to the plurality of second codepoints is used for the specified CORESETPoolIndex, or the indication information is used to indicate that one set of unified TCI states corresponding to each second codepoint is used for the specified CORESETPoolIndex.

The indication information may be an RRC signaling.

In an example, by means of the RRC signaling, it is indicated that one set of unified TCI states corresponding to the plurality of second codepoints is used for a specified CORESETPoolIndex. For example, in an example, the specified CORESETPoolIndex is CORESETPoolIndex#0 or CORESETPoolIndex#1. The RRC signaling may indicate that one set of unified TCI states corresponding to all second codepoints activated by the second MAC CE signaling is used for CORESETPoolIndex#0, or the RRC signaling may indicate that one set of unified TCI states corresponding to all second codepoints activated by the second MAC CE signaling is used for CORESETPoolIndex#1.

In an example, when the second MAC CE signaling activates unified TCI state#1 corresponding to the second codepoint codepoint#0, the terminal may determine, according to an indication of the indication information, that CORESETPoolIndex with an index value of 0 (represented by CORESETPoolIndex#0 for example) corresponds to one set of unified TCI states (represented by unified TCI state#1 for example) of the second codepoint codepoint#0. When the second MAC CE signaling activates unified TCI state#2 corresponding to the second codepoint codepoint#1, the terminal may determine, according to an indication of the indication information, that CORESETPoolIndex with an index value of 0 (represented by CORESETPoolIndex#0 for example) corresponds to one set of unified TCI states (represented by unified TCI state#2 for example) of the second codepoint codepoint#1. In other words, the mapping relationship indicated by the RRC signaling is applicable for all second codepoints, that is, for all second codepoints, CORESETPoolIndex#0 corresponds to one set of unified TCI states of the second codepoint.

In another example, the RRC signaling indicates that one set of unified TCI states corresponding to each second codepoint is used for a specified CORESETPoolIndex. For example, for the second codepoint codepoint#0, it is indicated that CORESETPoolIndex with an index value of 0 (represented by CORESETPoolIndex#0 for example) corresponds to one set of unified TCI states for the second codepoint codepoint#0. And for the second codepoint codepoint#1, CORESETPoolIndex with an index value of 1 (represented by CORESETPoolIndex#1 for example) corresponds to one set of unified TCI states for the second codepoint codepoint#1. When the second MAC CE signaling activates the unified TCI state#1 corresponding to the second codepoint codepoint#0, the terminal may determine, according to an indication of the indication information, that the CORESETPoolIndex with the index value of 0 (represented by CORESETPoolIndex#0 for example) corresponds to the unified TCI state#1 of the second codepoint codepoint#0. When the second MAC CE signaling activates the unified TCI state#2 corresponding to the second codepoint codepoint#1, the terminal may determine, according to an indication of the indication information, that the CORESETPoolIndex with the index value of 1 (represented by CORESETPoolIndex#1 for example) corresponds to the unified TCI state#2 of the second codepoint codepoint#1. In other words, the RRC signaling may independently indicate the mapping relationship between the unified TCI state and CORESETPoolIndex for each second codepoint. That is, for at least one second codepoint, the RRC signaling may indicate that CORESETPoolIndex#0 corresponds to one set of unified TCI states corresponding to this second codepoint, and for at least another second codepoint, the RRC signaling may also indicate that CORESETPoolIndex#1 corresponds to one set of unified TCI states corresponding to this second codepoint.

The indication information may be a MAC CE signaling.

In an example, by means of the MAC CE signaling, it is indicated that one set of unified TCI states corresponding to the second codepoint is used for a specified CORESETPoolIndex. For example, in an example, the specified CORESETPoolIndex is CORESETPoolIndex#0 or CORESETPoolIndex#1. The MAC CE signaling may indicate that one set of unified TCI states corresponding to all second codepoints activated by the second MAC CE signaling is used for CORESETPoolIndex#0, or the MAC CE signaling may indicate that one set of unified TCI states corresponding to all second codepoints activated by the second MAC CE signaling is used for CORESETPoolIndex#1.

For an embodiment of the present disclosure, the MAC CE signaling includes, for example, a second MAC CE signaling for activating the unified TCI state, and a MAC CE signaling for carrying indication information, and the two MAC CE signalings may be the same MAC CE signaling. At this case, activation of the unified TCI state and indication of the mapping relationship may be completed through one MAC CE signaling.

In an example, when the second MAC CE signaling activates unified TCI state#1 corresponding to the second codepoint codepoint#0, the terminal may determine, according to an indication of the indication information, that CORESETPoolIndex with an index value of 0 (represented by CORESETPoolIndex#0 for example) corresponds to one set of unified TCI states (represented by unified TCI state#1 for example) of the second codepoint codepoint#0. When the second MAC CE signaling activates unified TCI state#2 corresponding to the second codepoint codepoint#1, the terminal may determine, according to an indication of the indication information, that CORESETPoolIndex with an index value of 0 (represented by CORESETPoolIndex#0 for example) corresponds to one set of unified TCI states (represented by unified TCI state#2 for example) of the second codepoint codepoint#1. In other words, the mapping relationship indicated by the MAC CE signaling used to carry the indication information is applicable for all second codepoints, that is, for all second codepoints, CORESETPoolIndex#0 corresponds to one set of unified TCI states of the second codepoint.

In another example, the MAC CE signaling indicates that one set of unified TCI states corresponding to each second codepoint is used for a specified CORESETPoolIndex. For example, for the second codepoint codepoint#0, it is indicated that CORESETPoolIndex with an index value of 0 (represented by CORESETPoolIndex#0 for example) corresponds to one set of unified TCI states for the second codepoint codepoint#0. And for the second codepoint codepoint#1, CORESETPoolIndex with an index value of 1 (represented by CORESETPoolIndex#1 for example) corresponds to one set of unified TCI states for the second codepoint codepoint#1. When the second MAC CE signaling activates the unified TCI state#1 corresponding to the second codepoint codepoint#0, the terminal may determine, according to an indication of the indication information, that the CORESETPoolIndex with the index value of 0 (represented by CORESETPoolIndex#0 for example) corresponds to the unified TCI state#1 of the second codepoint codepoint#0. When the second MAC CE signaling activates the unified TCI state#2 corresponding to the second codepoint codepoint#1, the terminal may determine, according to an indication of the indication information, that the CORESETPoolIndex with the index value of 1 (represented by CORESETPoolIndex#1 for example) corresponds to the unified TCI state#2 of the second codepoint codepoint#1. In other words, the MAC CE signaling may independently indicate the mapping relationship between the unified TCI state and CORESETPoolIndex for each second codepoint. That is, for at least one second codepoint, the MAC CE signaling carrying the indication information may indicate that CORESETPoolIndex#0 corresponds to one set of unified TCI states corresponding to this second codepoint, and for at least another second codepoint, the MAC CE signaling carrying the indication information may also indicate that CORESETPoolIndex#1 corresponds to one set of unified TCI states corresponding to this second codepoint.

Based on the same concept, an embodiment of the present disclosure also provides a method for determining a TCI state, performed by a network device. The network device involved in this embodiment is used to interact with the terminal involved in any of the above embodiments to complete the configuration of the CC list and the activation or update of the unified TCI state. If there are any unclear points in the following embodiments, reference can be made to any of the above embodiments. Similarly, if there are any unclear points in the above embodiments, reference can be made to any of the following embodiments.

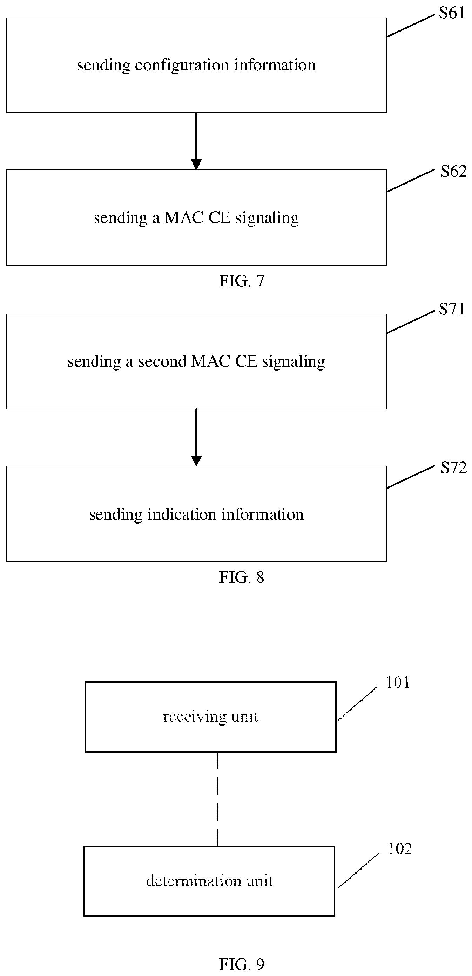

FIG. 7 is a flowchart illustrating a method for determining a TCI state according to an illustrative embodiment. As shown in FIG. 7, the method may be performed by a network device and include the following steps.

At step S61, configuration information is sent.

At step S62, a MAC CE signaling is sent.

The configuration information is configured to configure a CC list.

In an embodiment of the present disclosure, the configuration information is configured to configure the CC list. The MAC CE signaling is configured to activate a unified TCI state of the first serving cell and/or the second serving cell.

The unified TCI state includes at least one of a joint TCI state, a DL TCI state, or a UL TCI state.

It is understandable that the unified TCI state involved in embodiments of the present disclosure may be the joint TCI state, or may be the DL TCI state, or may be the UL TCI state. Or the unified TCI state may include the joint TCI state and the DL TCI state. Or the unified TCI state may include the DL TCI state and the UL TCI state.

According to the method provided in this embodiment of the present disclosure, the network device may configure the CC list for the terminal by means of sending the configuration information. Furthermore, the network device may achieve activation or update of the unified TCI state of the first serving cell and/or the second serving cell by means of sending the MAC CE signaling.

For example, the CC list configured by the terminal based on the configuration information may include at least one serving cell. The at least one serving cell included in the CC list may include a first serving cell for S-DCI indicator based M-TRP transmission and/or a second serving cell for M-DCI indicator based M-TRP transmission.

In an example, respective serving cells configured in one CC list may be configured with the same DCI indication mode. For example, the plurality of serving cells in the one CC list may all be first serving cells. Or, for another example, the plurality of serving cells in the one CC list may all be second serving cells.

In the method for determining the TCI state provided by an embodiment of the present disclosure, respective serving cells configured in one CC list may be configured with different DCI indication modes. For example, the one CC list may include at least one first serving cell and at least one second serving cell.

In another example, each service cell configured in one CC list may be configured with a different DCI indication mode. For example, the one CC list may include both the at least one first serving cell and the at least one second serving cell.

The one CC list includes both the first serving cell and the second serving cell. By means of a process of activating the TCI state, it is determined that a serving cell applicable to the activated TCI state includes the first serving cell and/or the second serving cell.

For example, any second serving cell for M-DCI indicator based M-TRP transmission may include at least two CORESETs. For the at least two CORESETs included in the second serving cell, there are at least two CORESETs corresponding to different CORESETPoolIndexes. For example, a CORESETPoolIndex of one CORESET may be configured as 1, and a CORESETPoolIndex of another CORESET may be configured as 0. For another example, the CORESETPoolIndex of one CORESET may be configured as 1, and the CORESETPoolIndex of another CORESET may not be configured as any value.

In embodiments of the present disclosure, different MAC CE signalings for activating the unified TCI state in different manners may be configured. For convenience of description below, in the present disclosure, different MAC CE signalings for activating the unified TCI state in different manner may be referred to be as a first MAC CE signaling and a second MAC CE signaling, respectively.

In the method for determining the TCI state provided by an embodiment of the present disclosure, the first MAC CE signaling includes at least one CORESETPoolIndex, and the first MAC CE signaling is configured to activate a unified TCI state corresponding to one or more codepoints associated with the at least one CORESETPoolIndex. For each individual CORESETPoolIndex, each codepoint may correspond to one set of unified TCI states.

Different MAC CEs may be used to activate unified TCI states of codepoints corresponding to different CORESETPoolIndexes for the plurality of serving cells in the CC list. Or one MAC CE may be used to activate the unified TCI states of the codepoints corresponding to different CORESETPoolIndexes for the plurality of serving cells in the CC list.

It is understandable that in an embodiment of the present disclosure, an analogous MAC CE for M-DCI based M-TRP is used to activate a TCI state of the plurality of serving cells in the CC list. The activated TCI state may be applicable for the serving cell for M-DCI based M-TRP (the second serving cell), and also to the serving cell for S-DCI based M-TRP (the first serving cell).

In an implementation, the network device sends the first MAC CE signaling, and the first MAC CE signaling is used to activate the unified TCI states corresponding to one or more codepoints associated with at least one CORESETPoolIndex. Each of the one or more codepoints may correspond to one set of unified TCI states. That is, the first MAC CE activates one or more codepoints corresponding to each CORESETPoolIndex for the second serving cell, and for the one or more codepoints corresponding to each individual CORESETPoolIndex, each codepoint may correspond to one set of unified TCI states. The one set of unified TCI states includes a joint TCI state, or includes at least one of a downlink TCI state and an uplink TCI state.

It is understandable that a codepoint in embodiments of the present disclosure may include a codepoint corresponding to a TCI field in a DCI. Regarding each individual CORESETPoolIndex for the second serving cell, the first MAC CE signaling activates the unified TCI state corresponding to each of the one or more codepoints, and a TCI state corresponding to which codepoint the terminal is finally to be adopted is determined based on a codepoint corresponding to a TCI field in a DCI signaling sent by a network device. That is, the terminal may determine the unified TCI state that is finally to be adopted according to a codepoint corresponding to a TCI field in a DCI carried by a PDCCH sent based on the CORESET associated with the CORESETPoolIndex, as well as according to the unified TCI state corresponding to the codepoint associated with the CORESETPoolIndex and activated by the first MAC CE signaling.

Since the first MAC CE signaling activates the unified TCI state corresponding to the one or more codepoints for each individual CORESETPoolIndex, the unified TCI state corresponding to the one or more codepoints associated with each individual CORESETPoolIndex for the second serving cell may be directly determined based on the first MAC CE signaling.

In an embodiment of the present disclosure, the first MAC CE signaling is used to activate one set of unified TCI states corresponding to each of one or more codepoints associated with each individual CORESETPoolIndex for the second serving cell.

In an example of the present disclosure, the first MAC CE signaling may include a plurality of MAC CE signalings. For example, the first MAC CE signaling includes MAC CE#1 and MAC CE#2. Different MAC CE signalings in the plurality of MAC CE signalings may respectively activate one or more codepoints corresponding to each CORESETPoolIndex. The one or more codepoints may be one or more codepoints in a TCI field of a DCI. It is understandable that respective different MAC CE signalings in the first MAC CE signaling in an embodiment of the present disclosure may activate the unified TCI state corresponding to one or more codepoints in the TCI field of the DCI for different CORESETPoolIndexes. It is also understandable that the same codepoint in the TCI fields of the DCI may correspond to a plurality of sets of different unified TCI states, and each set of unified TCI states corresponds to one CORESETPoolIndex. For convenience of description, the codepoint corresponding to the plurality of sets of different unified TCI states in the one or more codepoints corresponding to the first serving cell may be referred to as a first codepoint.

In an embodiment, each of different first MAC CE signalings may activate one different set of unified TCI states corresponding to the same first codepoint in the TCI field of the DCI for each of different CORESETPoolIndexes.

In another embodiment, for different first MAC CE signalings, one of the first MAC CE signalings may activate one set of unified TCI states corresponding to the first codepoint in the TCI field of the DCI for the first CORESETPoolIndex, while another one of the first MAC CE signalings does not activate any unified TCI state for the first codepoint in the TCI field of the DCI for the second CORESETPoolIndex.

In another embodiment, one first MAC CE signaling may activate two different sets of unified TCI states corresponding to the same first codepoint in the TCI field of the DCI for the first CORESETPoolIndex and the second CORESETPoolIndex, respectively.

In another embodiment, one first MAC CE signaling may activate one set of unified TCI states corresponding to one first codepoint in the TCI field of the DCI only for the first CORESETPoolIndex or only for the second CORESETPoolIndex.

In an embodiment of the disclosure, in addition to the first MAC CE signaling involved above, the activation of the unified TCI state may also be realized through a second MAC CE signaling. The second MAC CE signaling is configured to activate a unified TCI state corresponding to one or more codepoints, and the one or more codepoints includes at least one codepoint corresponding to a plurality of sets of activated unified TCI states.

An implementation solution of activating the unified TCI state corresponding to the one or more codepoints based on the second MAC CE signaling may be understood as a solution of activating the TCI state using a MAC CE for S-DCI based M-TRP. That is, the second MAC CE signaling may not include an identifier of CORESETPoolIndex.

In addition, the second MAC CE signaling has not yet specified a correspondence between the unified TCI state and the CORESETPoolIndex, therefore, the unified TCI state corresponding to each CORESETPoolIndex applicable for the second serving cell cannot be determined in the activated unified TCI state through the second MAC CE signaling. In this regard, for one or more sets of TCI states corresponding to each codepoint activated by a MAC CE (second MAC CE), it is necessary to further determine a correspondence between each CORESETPoolIndex for the second serving cell and one or more sets of activated TCI states. Moreover, for the network device side, the correspondence may be indicated for the terminal by sending indication information.

In an embodiment, the network device may indicate for the terminal a relationship between a unified TCI state corresponding to a codepoint and the CORESETPoolIndex by means of sending the indication information.

FIG. 8 is a flowchart illustrating a method for sending the indication information according to an illustrative embodiment. As shown in FIG. 8, the method includes the following steps.

At step S71, a second MAC CE signaling is sent.

At step S72, indication information is sent.

In an embodiment of the present disclosure, the indication information is configured to indicate the relationship between the unified TCI state corresponding to the codepoint and CORESETPoolIndex. In a case where the network device sends the indication information, the terminal may receive the indication information, and then determine one set of unified TCI states corresponding to each of one or more code points associated with each CORESETPoolIndex for the second serving cell based on the indication information and the second MAC CE signaling.

In an implementation, in a case where the codepoint activated by the second MAC CE signaling includes the first codepoint corresponding to the plurality of sets of unified TCI states, the indication information is configured to indicate a mapping relationship between the plurality of sets of unified TCI states corresponding to the plurality of first codepoints and CORESETPoolIndexes, or the indication information is configured to indicate a mapping relationship between the plurality of sets of unified TCI states corresponding to each first codepoint and CORESETPoolIndexes.

The indication information may be an RRC signaling.

In an example, the mapping relationship between the plurality of sets of unified TCI states corresponding to the plurality of first codepoints and the CORESETPoolIndexes may be indicated through the RRC signaling, for example, the RRC signaling indicates the mapping relationship between the plurality of sets of unified TCI states corresponding to the plurality of first codepoints and the CORESETPoolIndexes.

In an example, the RRC signaling indicates the mapping relationship between the plurality of unified TCI states corresponding to the plurality of first codepoints and CORESETPoolIndexes, for example, indicates that a CORESETPoolIndex with an index value of 0 (represented by CORESETPoolIndex#0 for example) corresponds to a first unified TCI state of the first codepoint, and a CORESETPoolIndex with an index value of 1 (represented by CORESETPoolIndex#1 for example) corresponds to a second unified TCI state of the first codepoint. When the second MAC CE signaling activates the unified TCI state#1 and unified TCI state#2 corresponding to the first codepoint codepoint#0, where the unified TCI state#1 is at a bit position of the first unified TCI state corresponding to the codepoint#0, and the unified TCI state#2 is at a bit position of the second unified TCI state corresponding to the codepoint#0, the terminal may determine, according to an indication of the indication information, that the CORESETPoolIndex with the index value of 0 (represented by CORESETPoolIndex#0 for example) corresponds to the first unified TCI state (represented by unified TCI state#1 for example) of the first codepoint codepoint#0, and determine that the CORESETPoolIndex with an index value of 1 (represented by CORESETPoolIndex#1 for example) corresponds to the second unified TCI state (represented by unified TCI state#2 for example) of the first codepoint codepoint#0. When the second MAC CE signaling activates unified TCI state#3 and unified TCI state#4 corresponding to the first codepoint codepoint#1, where the unified TCI state#3 is at a bit position of a first unified TCI state corresponding to the codepoint#1, and the unified TCI state#4 is at a bit position of a second unified TCI state corresponding to the codepoint#1, the terminal may determine, according to an indication of the indication information, that the CORESETPoolIndex with an index value of 0 (represented by CORESETPoolIndex#0 for example) corresponds to the first unified TCI state (represented by unified TCI state#3 for example) of the first codepoint codepoint#1 by, and determine that the CORESETPoolIndex with an index value of 1 (represented by CORESETPoolIndex#1 for example) corresponds to the second unified TCI state (represented by unified TCI state#4 for example) of the first codepoint codepoint#1. That is, the mapping relationship indicated by the RRC signaling is applicable to all first codepoints, that is, for all first codepoints, CORESETPoolIndex#0 corresponds to the first unified TCI state of the first codepoint, and CORESETPoolIndex#1 corresponds to the second unified TCI state of the first codepoint.

In another example, the RRC signaling indicates a correspondence between the plurality of sets of unified TCI states corresponding to each of the plurality of first codepoints and CORESETPoolIndexes. For example, for the first codepoint codepoint#0, it is indicated that the CORESETPoolIndex with an index value of 0 (represented by CORESETPoolIndex#0 for example) corresponds to the first unified TCI state of the first codepoint codepoint#0, and the CORESETPoolIndex with an index value of 1 (represented by CORESETPoolIndex#1 for example) corresponds to the second unified TCI state of the first codepoint codepoint#0. And for the first codepoint codepoint#1, it is indicated that the CORESETPoolIndex with an index value of 0 (represented by CORESETPoolIndex#0 for example) corresponds to the second unified TCI state of the first codepoint codepoint#1, and the CORESETPoolIndex with an index value of 1 (represented by CORESETPoolIndex#1 for example) corresponds to the first unified TCI state of the first codepoint codepoint#1. When the second MAC CE signaling activates the unified TCI state#1 and unified TCI state#2 corresponding to the first codepoint codepoint#0, where the unified TCI state#1 is at a bit position of the first unified TCI state corresponding to the codepoint#0, and the unified TCI state#2 is at a bit position of the second unified TCI state corresponding to the codepoint#0, the terminal may determine, according to an indication of the indication information, that the CORESETPoolIndex with an index value of 0 (represented by CORESETPoolIndex#0 for example) corresponds to the first unified TCI state (represented by unified TCI state#1 for example) of the first codepoint codepoint#0, and the CORESETPoolIndex with an index value of 1 (represented by CORESETPoolIndex#1 for example) corresponds to the second unified TCI state (represented by unified TCI state#2 for example) of the first codepoint codepoint#0. When the second MAC CE signaling activates unified TCI state#3 and unified TCI state#4 corresponding to the first codepoint codepoint#1, where the unified TCI state#3 is at a bit position of the first unified TCI state corresponding to the codepoint#1, and represented unified TCI state#4 is at a bit position of the second unified TCI state corresponding to the codepoint#1, the terminal may determine, according to an indication of the indication information, that the CORESETPoolIndex with an index value of 0 (represented by CORESETPoolIndex#0 for example) corresponds to the second unified TCI state (represented by unified TCI state#4 for example) of the first codepoint codepoint#1, and the CORESETPoolIndex with an index value of 1 (represented by CORESETPoolIndex#1 for example) corresponds to the first unified TCI state (represented by unified TCI state#3 for example) of the first codepoint codepoint#1. In other words, the RRC signaling may independently indicate the mapping relationship between the plurality of sets of unified TCI states and CORESETPoolIndexes for each individual first codepoint. That is, for the at least one first codepoint, the RRC signaling may indicate that CORESETPoolIndex#0 corresponds to the first unified TCI state of the first codepoint, and CORESETPoolIndex#1 corresponds to the second unified TCI state of the first codepoint. And for at least another first codepoint, the RRC signaling may indicate that CORESETPoolIndex#0 corresponds to the second unified TCI state of the first codepoint, and CORESETPoolIndex#1 corresponds to the first unified TCI state of the first codepoint.

The above-mentioned correspondence indicated by the RRC signaling may also be reversed. For example, the RRC signaling indicates that the CORESETPoolIndex with an index value of 0 (represented by CORESETPoolIndex#0 for example) corresponds to the second unified TCI state of the first codepoint, and the CORESETPoolIndex with an index value of 1 (represented by CORESETPoolIndex#1 for example) corresponds to the first unified TCI state of the first codepoint.

The indication information may be a MAC CE signaling.

In an example, the MAC CE signaling indicates a mapping relationship between a plurality of sets of unified TCI states corresponding to a plurality of first codepoints and CORESETPoolIndexes. For example, the MAC CE signaling indicates the mapping relationship between the plurality of sets of unified TCI states corresponding to the plurality of first codepoints and CORESETPoolIndexes.

For the embodiments of the present disclosure, the MAC CE signaling indicating the mapping relationship between the plurality of sets of unified TCI states corresponding to the plurality of first codepoints and CORESETPoolIndexes may be a second MAC CE signaling for activating the unified TCI state. That is, the MAC CE signaling carrying the indication information and the second MAC CE signaling for activating the unified TCI state may be the same MAC CE signaling. At this case, activation of the unified TCI state and indication of the mapping relationship may be completed through one MAC CE signaling.

In an example, the MAC CE signaling indicates the mapping relationship between the plurality of unified TCI states corresponding to the plurality of first codepoints and CORESETPoolIndexes, for example, indicates that a CORESETPoolIndex with an index value of 0 (represented by CORESETPoolIndex#0 for example) corresponds to a first unified TCI state of the first codepoint, and a CORESETPoolIndex with an index value of 1 (represented by CORESETPoolIndex#1 for example) corresponds to a second unified TCI state of the first codepoint. When the second MAC CE signaling activates the unified TCI state#1 and unified TCI state#2 corresponding to the first codepoint codepoint#0, where the unified TCI state#1 is at a bit position of the first unified TCI state corresponding to the codepoint#0, and the unified TCI state#2 is at a bit position of the second unified TCI state corresponding to the codepoint#0, the terminal may determine, according to an indication of the indication information, that the CORESETPoolIndex with the index value of 0 (represented by CORESETPoolIndex#0 for example) corresponds to the first unified TCI state (represented by unified TCI state#1 for example) of the first codepoint codepoint#0, and determine that the CORESETPoolIndex with an index value of 1 (represented by CORESETPoolIndex#1 for example) corresponds to the second unified TCI state (represented by unified TCI state#2 for example) of the first codepoint codepoint#0. When the second MAC CE signaling activates unified TCI state#3 and unified TCI state#4 corresponding to the first codepoint codepoint#1, where the unified TCI state#3 is at a bit position of a first unified TCI state corresponding to the codepoint#1, and the unified TCI state#4 is at a bit position of a second unified TCI state corresponding to the codepoint#1, the terminal may determine, according to an indication of the indication information, that the CORESETPoolIndex with an index value of 0 (represented by CORESETPoolIndex#0 for example) corresponds to the first unified TCI state (represented by unified TCI state#3 for example) of the first codepoint codepoint#1 by, and determine that the CORESETPoolIndex with an index value of 1 (represented by CORESETPoolIndex#1 for example) corresponds to the second unified TCI state (represented by unified TCI state#4 for example) of the first codepoint codepoint#1. That is, the mapping relationship indicated by the MAC CE signaling carrying the indication information is applicable to all first codepoints, that is, for all first codepoints, CORESETPoolIndex#0 corresponds to the first unified TCI state of the first codepoint, and CORESETPoolIndex#1 corresponds to the second unified TCI state of the first codepoint.

In another example, the MAC CE signaling indicates a correspondence between the plurality of sets of unified TCI states corresponding to each of the plurality of first codepoints and CORESETPoolIndexes. For example, for the first codepoint codepoint#0, it is indicated that the CORESETPoolIndex with an index value of 0 (represented by CORESETPoolIndex#0 for example) corresponds to the first unified TCI state of the first codepoint codepoint#0, and the CORESETPoolIndex with an index value of 1 (represented by CORESETPoolIndex#1 for example) corresponds to the second unified TCI state of the first codepoint codepoint#0. And for the first codepoint codepoint#1, it is indicated that the CORESETPoolIndex with an index value of 0 (represented by CORESETPoolIndex#0 for example) corresponds to the second unified TCI state of the first codepoint codepoint#1, and the CORESETPoolIndex with an index value of 1 (represented by CORESETPoolIndex#1 for example) corresponds to the first unified TCI state of the first codepoint codepoint#1. When the second MAC CE signaling activates the unified TCI state#1 and unified TCI state#2 corresponding to the first codepoint codepoint#0, where the unified TCI state#1 is at a bit position of the first unified TCI state corresponding to the codepoint#0, and the unified TCI state#2 is at a bit position of the second unified TCI state corresponding to the codepoint#0, the terminal may determine, according to an indication of the indication information, that the CORESETPoolIndex with an index value of 0 (represented by CORESETPoolIndex#0 for example) corresponds to the first unified TCI state (represented by unified TCI state#1 for example) of the first codepoint codepoint#0, and the CORESETPoolIndex with an index value of 1 (represented by CORESETPoolIndex#1 for example) corresponds to the second unified TCI state (represented by unified TCI state#2 for example) of the first codepoint codepoint#0. When the second MAC CE signaling activates unified TCI state#3 and unified TCI state#4 corresponding to the first codepoint codepoint#1, where the unified TCI state#3 is at a bit position of the first unified TCI state corresponding to the codepoint#1, and represented unified TCI state#4 is at a bit position of the second unified TCI state corresponding to the codepoint#1, the terminal may determine, according to an indication of the indication information, that the CORESETPoolIndex with an index value of 0 (represented by CORESETPoolIndex#0 for example) corresponds to the second unified TCI state (represented by unified TCI state#4 for example) of the first codepoint codepoint#1, and the CORESETPoolIndex with an index value of 1 (represented by CORESETPoolIndex#1 for example) corresponds to the first unified TCI state (represented by unified TCI state#3 for example) of the first codepoint codepoint#1. In other words, the MAC CE signaling carrying the indication information may independently indicate the mapping relationship between the plurality of sets of unified TCI states and CORESETPoolIndexes for each individual first codepoint. That is, for the at least one first codepoint, the MAC CE signaling may indicate that CORESETPoolIndex#0 corresponds to the first unified TCI state of the first codepoint, and CORESETPoolIndex#1 corresponds to the second unified TCI state of the first codepoint. And for at least another first codepoint, the MAC CE signaling may indicate that CORESETPoolIndex#0 corresponds to the second unified TCI state of the first codepoint, and CORESETPoolIndex#1 corresponds to the first unified TCI state of the first codepoint.

The above-mentioned correspondence indicated by the MAC CE signaling may also be reversed. For example, the MAC CE signaling indicates that the CORESETPoolIndex with an index value of 0 (represented by CORESETPoolIndex#0 for example) corresponds to the second unified TCI state of the first codepoint codepoint#0, and the CORESETPoolIndex with an index value of 1 (represented by CORESETPoolIndex#1 for example) corresponds to the first unified TCI state of the first codepoint codepoint#0. For example, in a case where the codepoint activated by the second MAC CE signaling includes a second codepoint corresponding to one set of unified TCI states, the unified TCI state may be determined based on the indication information and the second MAC CE signaling.

In an embodiment, in the case where the codepoint activated by the second MAC CE signaling includes the second codepoint corresponding to the one set of unified TCI states, the indication information is used to indicate that one set of unified TCI states corresponding to the plurality of second codepoints is used for the specified CORESETPoolIndex, or the indication information is used to indicate that one set of unified TCI states corresponding to each second codepoint is used for the specified CORESETPoolIndex.

The indication information may be an RRC signaling.

In an example, by means of the RRC signaling, it is indicated that one set of unified TCI states corresponding to the plurality of second codepoints is used for a specified CORESETPoolIndex. For example, in an example, the specified CORESETPoolIndex is CORESETPoolIndex#0 or CORESETPoolIndex#1. The RRC signaling may indicate that one set of unified TCI states corresponding to all second codepoints activated by the second MAC CE signaling is used for CORESETPoolIndex#0, or the RRC signaling may indicate that one set of unified TCI states corresponding to all second codepoints activated by the second MAC CE signaling is used for CORESETPoolIndex#1.

In an example, when the second MAC CE signaling activates unified TCI state#1 corresponding to the second codepoint codepoint#0, the terminal may determine, according to an indication of the indication information, that CORESETPoolIndex with an index value of 0 (represented by CORESETPoolIndex#0 for example) corresponds to one set of unified TCI states (represented by unified TCI state#1 for example) of the second codepoint codepoint#0. When the second MAC CE signaling activates unified TCI state#2 corresponding to the second codepoint codepoint#1, the terminal may determine, according to an indication of the indication information, that CORESETPoolIndex with an index value of 0 (represented by CORESETPoolIndex#0 for example) corresponds to one set of unified TCI states (represented by unified TCI state#2 for example) of the second codepoint codepoint#1. In other words, the mapping relationship indicated by the RRC signaling is applicable for all second codepoints, that is, for all second codepoints, CORESETPoolIndex#0 corresponds to one set of unified TCI states of the second codepoint.

In another example, the RRC signaling indicates that one set of unified TCI states corresponding to each second codepoint is used for a specified CORESETPoolIndex. For example, for the second codepoint codepoint#0, it is indicated that CORESETPoolIndex with an index value of 0 (represented by CORESETPoolIndex#0 for example) corresponds to one set of unified TCI states for the second codepoint codepoint#0. And for the second codepoint codepoint#1, CORESETPoolIndex with an index value of 1 (represented by CORESETPoolIndex#1 for example) corresponds to one set of unified TCI states for the second codepoint codepoint#1. When the second MAC CE signaling activates the unified TCI state#1 corresponding to the second codepoint codepoint#0, the terminal may determine, according to an indication of the indication information, that the CORESETPoolIndex with the index value of 0 (represented by CORESETPoolIndex#0 for example) corresponds to the unified TCI state#1 of the second codepoint codepoint#0. When the second MAC CE signaling activates the unified TCI state#2 corresponding to the second codepoint codepoint#1, the terminal may determine, according to an indication of the indication information, that the CORESETPoolIndex with the index value of 1 (represented by CORESETPoolIndex#1 for example) corresponds to the unified TCI state#2 of the second codepoint codepoint#1. In other words, the RRC signaling may independently indicate the mapping relationship between the unified TCI state and CORESETPoolIndex for each second codepoint. That is, for at least one second codepoint, the RRC signaling may indicate that CORESETPoolIndex#0 corresponds to one set of unified TCI states corresponding to this second codepoint, and for at least another second codepoint, the RRC signaling may also indicate that CORESETPoolIndex#1 corresponds to one set of unified TCI states corresponding to this second codepoint.

The indication information may be a MAC CE signaling.

In an example, by means of the MAC CE signaling, it is indicated that one set of unified TCI states corresponding to the second codepoint is used for a specified CORESETPoolIndex. For example, in an example, the specified CORESETPoolIndex is CORESETPoolIndex#0 or CORESETPoolIndex#1. The MAC CE signaling may indicate that one set of unified TCI states corresponding to all second codepoints activated by the second MAC CE signaling is used for CORESETPoolIndex#0, or the MAC CE signaling may indicate that one set of unified TCI states corresponding to all second codepoints activated by the second MAC CE signaling is used for CORESETPoolIndex#1.

For an embodiment of the present disclosure, the MAC CE signaling includes, for example, a second MAC CE signaling for activating the unified TCI state, and a MAC CE signaling for carrying indication information, and the two MAC CE signalings may be the same MAC CE signaling. At this case, activation of the unified TCI state and indication of the mapping relationship may be completed through one MAC CE signaling.

In an example, when the second MAC CE signaling activates unified TCI state#1 corresponding to the second codepoint codepoint#0, the terminal may determine, according to an indication of the indication information, that CORESETPoolIndex with an index value of 0 (represented by CORESETPoolIndex#0 for example) corresponds to one set of unified TCI states (represented by unified TCI state#1 for example) of the second codepoint codepoint#0. When the second MAC CE signaling activates unified TCI state#2 corresponding to the second codepoint codepoint#1, the terminal may determine, according to an indication of the indication information, that CORESETPoolIndex with an index value of 0 (represented by CORESETPoolIndex#0 for example) corresponds to one set of unified TCI states (represented by unified TCI state#2 for example) of the second codepoint codepoint#1. In other words, the mapping relationship indicated by the MAC CE signaling used to carry the indication information is applicable for all second codepoints, that is, for all second codepoints, CORESETPoolIndex#0 corresponds to one set of unified TCI states of the second codepoint.

In another example, the MAC CE signaling indicates that one set of unified TCI states corresponding to each second codepoint is used for a specified CORESETPoolIndex. For example, for the second codepoint codepoint#0, it is indicated that CORESETPoolIndex with an index value of 0 (represented by CORESETPoolIndex#0 for example) corresponds to one set of unified TCI states for the second codepoint codepoint#0. And for the second codepoint codepoint#1, CORESETPoolIndex with an index value of 1 (represented by CORESETPoolIndex#1 for example) corresponds to one set of unified TCI states for the second codepoint codepoint#1. When the second MAC CE signaling activates the unified TCI state#1 corresponding to the second codepoint codepoint#0, the terminal may determine, according to an indication of the indication information, that the CORESETPoolIndex with the index value of 0 (represented by CORESETPoolIndex#0 for example) corresponds to the unified TCI state#1 of the second codepoint codepoint#0. When the second MAC CE signaling activates the unified TCI state#2 corresponding to the second codepoint codepoint#1, the terminal may determine, according to an indication of the indication information, that the CORESETPoolIndex with the index value of 1 (represented by CORESETPoolIndex#1 for example) corresponds to the unified TCI state#2 of the second codepoint codepoint#1. In other words, the MAC CE signaling may independently indicate the mapping relationship between the unified TCI state and CORESETPoolIndex for each second codepoint. That is, for at least one second codepoint, the MAC CE signaling carrying the indication information may indicate that CORESETPoolIndex#0 corresponds to one set of unified TCI states corresponding to this second codepoint, and for at least another second codepoint, the MAC CE signaling carrying the indication information may also indicate that CORESETPoolIndex#1 corresponds to one set of unified TCI states corresponding to this second codepoint.

Based on the above embodiments, the indication information may be carried in an RRC signaling and/or a MAC CE signaling.

For example, when the indication information is carried in the MAC CE signaling, the MAC CE signaling for activating the unified TCI state and the MAC CE signaling carrying the indication information may be the same MAC CE signaling.

In the above embodiment, one set of unified TCI states includes a joint TCI state, or includes at least one of a downlink TCI state or an uplink TCI state.

It can be understood that the technical implementation involved in the process of the network device determining the TCI state in embodiments of the present disclosure may be applied to the process of the terminal determining the TCI state in embodiments of the present disclosure. Therefore, if the description of some technical implementations of the process of the network device determining the TCI state is not detailed enough, reference can be made to the relevant description of the implementation process of the terminal determining the TCI state, which will not be repeated.

It can be understood that the method for determining the TCI state provided in the embodiments of the present disclosure is applicable to the process of determining the TCI state in an interaction process between the terminal and the network device. The interaction process between the terminal and the network device to realize the TCI state is not described in detail in the embodiments of the present disclosure.

It should be noted that those skilled in the art may understand that the various implementations/embodiments involved in embodiments of the present disclosure may be used in conjunction with the aforementioned embodiments or may be used independently. The principles of implementation are similar, whether used alone or in conjunction with the aforementioned embodiments. In the implementation of the present disclosure, some embodiments are described in terms of implementations used together. Those skilled in the art may understand that such illustrations do not limit embodiments of the present disclosure.

Based on the same concept, embodiments of the present disclosure further provide an apparatus for determining a TCI state.

It may be understood that the apparatus for determining the TCI state provided by the embodiments of the present disclosure includes corresponding hardware structures and/or software modules for performing various functions in order to implement the above-mentioned functions. The embodiments of the present disclosure may be implemented in a form of hardware or a combination of hardware and computer software in combination with units and algorithm steps of each example disclosed in the embodiments of the present disclosure. Whether a function is performed by hardware or by hardware driven by computer software depends on specific applications and design constraints of the technical solution. Those skilled in the art may use different methods to implement the described functions for each specific application, but such an implementation should not be regarded as extending beyond the scope of the technical solutions of the embodiments of the present disclosure.

FIG. 9 is a block diagram illustrating an apparatus for determining a TCI state according to an illustrative embodiment. Referring to FIG. 9, the apparatus 100 includes a receiving module 101.

The receiving unit 101 is configured to receive configuration information sent by a network device, in which, the configuration information is configured to configure a component carrier list, and to receive a MAC CE signaling, in which, the MAC CE signaling is configured to activate a unified TCI state of a first serving cell and/or a second serving cell; in which, the component carrier list includes at least one serving cell, and the at least one serving cell includes the first serving cell for S-DCI indicator based M-TRP transmission, and/or the second serving cell for M-DCI indicator based M-TRP transmission.

In an implementation, a plurality of serving cells in the component carrier list are first serving cells; or a plurality of serving cells in the component carrier list are second serving cells.

In an implementation, the component carrier list includes at least one first serving cell and at least one second serving cell.

In an implementation, two control resource sets of the second serving cell correspond to different control resource set pool indexes.

In an implementation, the MAC CE signaling is a first MAC CE signaling, the first MAC CE signaling comprises at least one control resource set pool index, and the first MAC CE signaling is configured to activate a unified TCI state corresponding to one or more codepoints associated with the at least one control resource set pool index, each of the one or more codepoints corresponds to one set of unified TCI states.

In an implementation, the apparatus further comprising a determination unit 102, configured to: determine, based on the first MAC CE signaling, one set of unified TCI states corresponding to each of one or more codepoints associated with each control resource set pool index for the second serving cell.

In an implementation, the determination unit 102 is further configured to: determine, based on the first MAC CE signaling, one or more sets of unified TCI states corresponding to each of one or more codepoints associated with the first serving cell; in which, the one or more codepoints comprise a first codepoint corresponding to a plurality of sets of unified TCI states.

In an implementation, the MAC CE signaling is a second MAC CE signaling, and the second MAC CE signaling is configured to activate a unified TCI state corresponding to one or more codepoints, and the one or more codepoints comprises at least one codepoint corresponding to a plurality of sets of activated unified TCI states.

In an implementation, the determination unit 102 is further configured to: determine, based on the second MAC CE signaling, one or more sets of unified TCI states corresponding to each of one or more codepoints associated with the first serving cell.

In an implementation, the determination unit 102 is further configured to: determine, based on a default rule or indication information, and the second MAC CE signaling, one set of unified TCI states corresponding to each of one or more codepoints associated with each control resource set pool index for the second serving cell.

In an implementation, in response to a codepoint activated by the second MAC CE signaling comprising a first codepoint corresponding to a plurality of sets of unified TCI state, the default rule comprises that: a plurality of control resource set pool indexes are mapped one-to-one with the plurality of sets of unified TCI states corresponding to the first codepoint.

In an implementation, in response to a codepoint activated by the second MAC CE signaling comprising a first codepoint corresponding to a plurality of sets of unified TCI state, the indication information is configured to indicate a mapping relationship between the plurality of sets of unified TCI states corresponding to a plurality of first codepoints and control resource set pool indexes; or the indication information is configured to indicate a mapping relationship between a plurality of sets of unified TCI states corresponding to each first codepoint and control resource set pool indexes.

In an implementation, in response to a codepoint activated by the second MAC CE signaling comprising a second codepoint corresponding to one set of unified TCI states, and the default rule comprising that the one set of unified TCI states corresponds to a specified control resource set pool index.

In an implementation, in response to a codepoint activated by the second MAC CE signaling comprising a second codepoint corresponding to one set of unified TCI states, the indication information is configured to indicate that one set of unified TCI states corresponding to the plurality of second codepoints is used for a specified control resource set pool index; or the indication information is configured to indicate that one set of unified TCI states corresponding to each second codepoint is used for a specified control resource set pool index.

In an implementation, the indication information is carried in a radio resource control (RRC) signaling and/or an MAC CE signaling.

In an implementation, the MAC CE signaling for activating the unified TCI state and the MAC CE signaling carrying the indication information are the same MAC CE signaling.

In an implementation, one set of the unified TCI state comprises a joint TCI state, or comprises at least one of a downlink TCI state and an uplink TCI state.

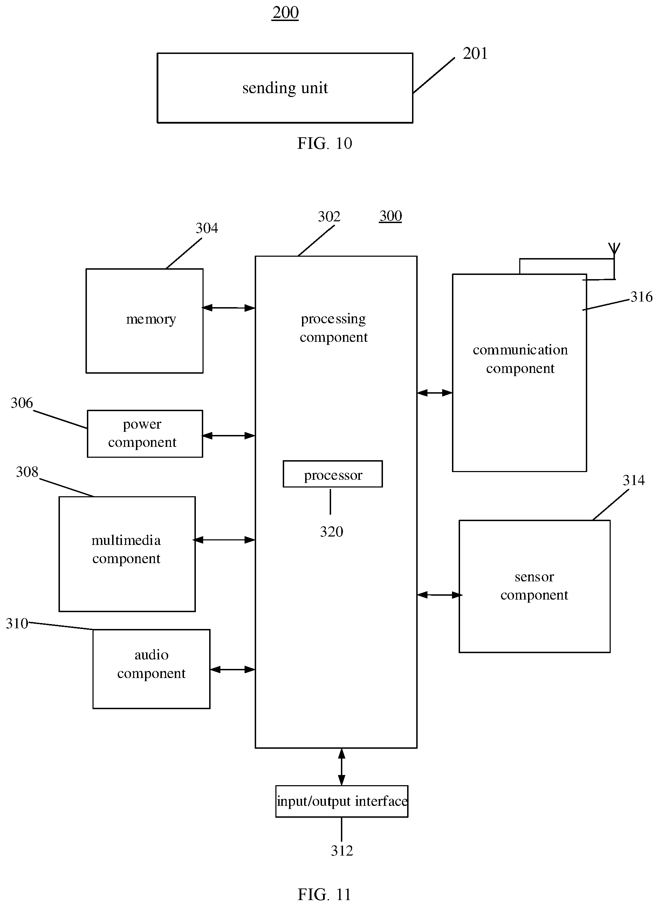

FIG. 10 is a block diagram illustrating an apparatus for determining a TCI state according to an illustrative embodiment. Referring to FIG. 10, the apparatus 200 includes a receiving module 201.

The sending unit 200 is configured to send configuration information, in which the configuration information is configured to configure a component carrier list, and to send a MAC CE signaling, in which, the MAC CE signaling is configured to activate a unified TCI state of a first serving cell and/or a second serving cell; in which, the component carrier list includes at least one serving cell, and the at least one serving cell includes the first serving cell for S-DCI indicator based M-TRP transmission, and/or the second serving cell for M-DCI indicator based M-TRP transmission.

In an implementation, a plurality of serving cells in the component carrier list are first serving cells; or a plurality of serving cells in the component carrier list are second serving cells.

In an implementation, the component carrier list includes at least one first serving cell and at least one second serving cell.

In an implementation, two control resource sets of the second serving cell correspond to different control resource set pool indexes.

In an implementation, the MAC CE signaling is a first MAC CE signaling, the first MAC CE signaling comprises at least one control resource set pool index, and the first MAC CE signaling is configured to activate a unified TCI state corresponding to one or more codepoints associated with the at least one control resource set pool index, each of the one or more codepoints corresponds to one set of unified TCI states.

In an implementation, the MAC CE signaling is a second MAC CE signaling, and the second MAC CE signaling is configured to activate a unified TCI state corresponding to one or more codepoints, and the one or more codepoints include a first codepoint corresponding to a plurality of sets of unified TCI states.

In an implementation, the sending unit 200 is further configured to send indication information, wherein the indication information is configured to indicate a relationship between a unified TCI state corresponding to a codepoint and a control resource set pool index.

In an implementation, in response to a codepoint activated by the second MAC CE signaling comprising a first codepoint corresponding to a plurality of sets of unified TCI state, the indication information is configured to indicate a mapping relationship between the plurality of sets of unified TCI states corresponding to a plurality of first codepoints and control resource set pool indexes; or the indication information is configured to indicate a mapping relationship between a plurality of sets of unified TCI states corresponding to each first codepoint and control resource set pool indexes.

In an implementation, in response to a codepoint activated by the second MAC CE signaling comprising a second codepoint corresponding to one set of unified TCI states, the indication information is configured to indicate that one set of unified TCI states corresponding to the plurality of second codepoints is used for a specified control resource set pool index; or the indication information is configured to indicate that one set of unified TCI states corresponding to each second codepoint is used for a specified control resource set pool index.

In an implementation, the indication information is carried in a radio resource control (RRC) signaling and/or an MAC CE signaling.

In an implementation, the MAC CE signaling for activating the unified TCI state and the MAC CE signaling carrying the indication information are the same MAC CE signaling.

In an implementation, one set of the unified TCI state comprises a joint TCI state, or comprises at least one of a downlink TCI state and an uplink TCI state.

With regard to the apparatuses in the above embodiments, the specific way in which each module performs operation(s) has been described in detail in the embodiments of the method, and will not be described in detail here.

FIG. 11 is a block diagram illustrating a device for determining a TCI state according to an illustrative embodiment. For example, a device 300 can be a mobile phone, a computer, a digital broadcast terminal, a messaging device, a game console, a tablet device, a medical device, a fitness device, a personal digital assistant, or the like.

Referring to FIG. 11, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, phone calls, data communications, camera operations, and recording operations. The processing component 302 can include one or more processors 320 to execute instructions to perform all or some of the steps in the above-described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, videos, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as keyboards, click wheels, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wireless, between the device 300 and other devices. The device 300 can access a wireless network based on a communication standard, such as Wi-Fi, 2G, or 3G, or a combination thereof. In an illustrative embodiment, the communication component 316 receives a broadcast signal or broadcast associated information from an external broadcast management system via a broadcast channel. In an illustrative embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above methods.

In an illustrative embodiment, there is also provided a non-transitory computer readable storage medium including instructions, such as included in the memory 304, executable by the processor 320 in the device 300, for completing the above-mentioned network data collection method. For example, the non-transitory computer-readable storage medium may be a ROM, a random access memory (RAM), a CD-ROM, a magnetic tape, a floppy disc, an optical data storage device, and the like.

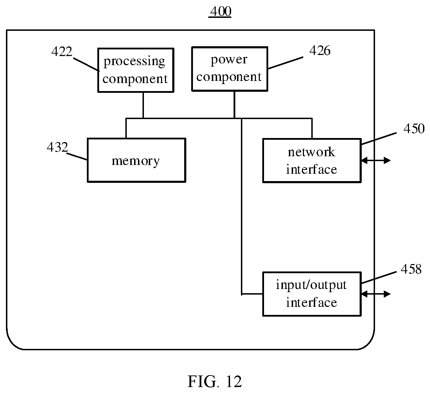

FIG. 12 is a block diagram illustrating a device for determining a TCI state according to an illustrative embodiment. For example, the device 400 is provided as a network device. Referring to FIG. 12, the device 400 includes a processing component 422 including one or more processors and a memory resource represented by a memory 432. The memory 432 is configured to store instructions executable by the processing component 422, such as an application program. The application program stored in the memory 432 may include one or more modules each corresponding to a set of instructions. In addition, the processing component 422 is configured to execute instructions so as to implement the above method.

The device 400 may also include a power component 426 configured to perform power management of the device 400, a wired or wireless network interface 450 configured to connect the device 400 to a network, and an input/output (I/O) interface 458. The device 400 may operate an operating system stored in the memory 432, such as Windows ServerTM, Mac OS XTM, UnixTM, LinuxTM, FreeBSDTM or similar operating systems.

In an embodiment, there is also provided a non-transitory computer-readable storage medium including instructions, such as a memory 432 including instructions, which can be executed by a processing component 422 of the device 400 to perform the above methods. For example, the non-transitory computer readable storage medium may be a ROM, a random access memory (RAM), a CD-ROM (compact disc read-only memory), a magnetic tape, a floppy disk, an optical data storage device, etc.

It is further understood that "a plurality" in this disclosure refers to two or more, and other quantifiers are similar thereto. Wording "and/or", which describes an associated relationship of associated objects, means that there may be three relationships, for example, A and/or B, which may mean that A exists alone, A and B exist at the same time, and B exists alone. A character "/" generally indicates that contextual objects are in an "or" relationship. Wording "a/an" and "the" in singular forms are intended to include plural forms, unless clearly indicated in the context otherwise.

It is further understood that the meaning of words such as "in response to" and "if" involved in the present disclosure depends on the context and the actual scenario of use, and as used herein, the term "in response to" may be understood to mean "when" or "upon" or "if" depending on the context.

It is further understood that terms such as "first", and "second" are used to describe various information, these information should not be limited by these terms. These terms are only used for distinguishing information of the same type from each other and do not denote a particular order or degree of importance. As a matter of fact, the terms such as "first", and "second" may be used interchangeably. For example, first information may also be referred to as second information, and similarly, the second information may also be referred to as the first information, without departing from the scope of embodiments of the present disclosure.

It is further understood that although operations are described in a specific order in the accompanying drawings in the embodiments of the present disclosure, it should not be understood that these operations are required to be performed in the specific order shown or in a serial order, or that all of the operations shown are required to be performed to obtain desired results. In certain circumstances, multitasking and parallel processing may be advantageous.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for determining a transmission configuration indicator (TCI) state, performed by a terminal, comprising:
receiving configuration information sent by a network device, wherein the configuration information is configured to configure a component carrier list;
wherein the component carrier list comprises at least one serving cell, and the at least one serving cell comprises a first serving cell for single transmission reception point (S-DCI) indicator based multi-transmission reception point (M-TRP) transmission, and/or a second serving cell for multi-downlink control information (M-DCI) indicator based M-TRP transmission; and
receiving a medium-access-control control element (MAC CE) signaling, wherein the MAC CE signaling is configured to activate a unified TCI state of the first serving cell and/or the second serving cell.

2. The method according to claim 1, wherein a plurality of serving cells in the component carrier list are first serving cells; or
a plurality of serving cells in the component carrier list are second serving cells.

3. The method according to claim 1, wherein the component carrier list comprises at least one first serving cell and at least one second serving cell.

4. The method according to claim 3, wherein two control resource sets of the second serving cell correspond to different control resource set pool indexes.

5. The method according to claim 4, wherein the MAC CE signaling is a first MAC CE signaling, the first MAC CE signaling comprises at least one control resource set pool index, and the first MAC CE signaling is configured to activate a unified TCI state corresponding to one or more codepoints associated with the at least one control resource set pool index, each of the one or more codepoints corresponds to one set of unified TCI states.

6. The method according to claim 5, further comprising: determining, based on the first MAC CE signaling, one set of unified TCI states corresponding to each of one or more codepoints associated with each control resource set pool index for the second serving cell.

7. The method according to claim 5, further comprising: determining, based on the first MAC CE signaling, one or more sets of unified TCI states corresponding to each of one or more codepoints associated with the first serving cell;
wherein the one or more codepoints comprise a first codepoint corresponding to a plurality of sets of unified TCI states.

8. The method according to claim 4, wherein the MAC CE signaling is a second MAC CE signaling, and the second MAC CE signaling is configured to activate a unified TCI state corresponding to one or more codepoints, and the one or more codepoints comprises at least one codepoint corresponding to a plurality of sets of activated unified TCI states.

9. The method according to claim 8, further comprising: determining, based on the second MAC CE signaling, one or more sets of unified TCI states corresponding to each of one or more codepoints associated with the first serving cell.

10. The method according to claim 8, further comprising: determining, based on a default rule or indication information, and the second MAC CE signaling, one set of unified TCI states corresponding to each of one or more codepoints associated with each control resource set pool index for the second serving cell.

11. The method according to claim 10, wherein, in response to a codepoint activated by the second MAC CE signaling comprising a first codepoint corresponding to a plurality of sets of unified TCI state, the default rule comprises that: a plurality of control resource set pool indexes are mapped one-to-one with the plurality of sets of unified TCI states corresponding to the first codepoint.

12. The method according to claim 10, wherein, in response to a codepoint activated by the second MAC CE signaling comprising a first codepoint corresponding to a plurality of sets of unified TCI state,
the indication information is configured to indicate a mapping relationship between the plurality of sets of unified TCI states corresponding to a plurality of first codepoints and control resource set pool indexes; or
the indication information is configured to indicate a mapping relationship between a plurality of sets of unified TCI states corresponding to each first codepoint and control resource set pool indexes.

13. The method according to claim 10, wherein, in response to a codepoint activated by the second MAC CE signaling comprising a second codepoint corresponding to one set of unified TCI states, and the default rule comprising that the one set of unified TCI states corresponds to a specified control resource set pool index.

14. The method according to claim 10, wherein, in response to a codepoint activated by the second MAC CE signaling comprising a second codepoint corresponding to one set of unified TCI states,
the indication information is configured to indicate that one set of unified TCI states corresponding to the plurality of second codepoints is used for a specified control resource set pool index; or
the indication information is configured to indicate that one set of unified TCI states corresponding to each second codepoint is used for a specified control resource set pool index.

15. The method according to any one of claims 10 to 14, wherein the indication information is carried in a radio resource control (RRC) signaling and/or an MAC CE signaling.

16. The method according to claim 15, wherein the MAC CE signaling for activating the unified TCI state and the MAC CE signaling carrying the indication information are the same MAC CE signaling.

17. The method according to any one of claims 1 to 16, wherein one set of the unified TCI state comprises a joint TCI state, or comprises at least one of a downlink TCI state and an uplink TCI state.

18. A method for determining a transmission configuration indicator (TCI) state, performed by a network device, comprising:
sending configuration information, wherein the configuration information is configured to configure a component carrier list;
wherein the component carrier list comprises at least one serving cell, and the at least one serving cell comprises a first serving cell for single transmission reception point (S-DCI) indicator based multi-transmission reception point (M-TRP) transmission, and/or a second serving cell for multi-downlink control information (M-DCI) indicator based M-TRP transmission; and
sending a medium-access-control control element (MAC CE) signaling, wherein the MAC CE signaling is configured to activate a unified TCI state of the first serving cell and/or the second serving cell.

19. The method according to claim 18, wherein a plurality of serving cells in the component carrier list are first serving cells; or
a plurality of serving cells in the component carrier list are second serving cells.

20. The method according to claim 18, wherein the component carrier list comprises at least one first serving cell and at least one second serving cell.

21. The method according to claim 20, wherein two control resource sets of the second serving cell correspond to different control resource set pool indexes.

22. The method according to claim 21, wherein the MAC CE signaling is a first MAC CE signaling, the first MAC CE signaling comprises at least one control resource set pool index, and the first MAC CE signaling is configured to activate a unified TCI state corresponding to one or more codepoints associated with the at least one control resource set pool index, each of the one or more codepoints corresponds to one set of unified TCI states.

23. The method according to claim 21, wherein the MAC CE signaling is a second MAC CE signaling, and the second MAC CE signaling is configured to activate a unified TCI state corresponding to one or more codepoints, and the one or more codepoints comprise a first codepoint corresponding to a plurality of sets of unified TCI states.

24. The method according to claim 23, further comprising:
sending indication information, wherein the indication information is configured to indicate a relationship between a unified TCI state corresponding to a codepoint and a control resource set pool index.

25. The method according to claim 24, wherein, in response to a codepoint activated by the second MAC CE signaling comprising a first codepoint corresponding to a plurality of sets of unified TCI state,
the indication information is configured to indicate a mapping relationship between the plurality of sets of unified TCI states corresponding to a plurality of first codepoints and control resource set pool indexes; or
the indication information is configured to indicate a mapping relationship between a plurality of sets of unified TCI states corresponding to each first codepoint and control resource set pool indexes.

26. The method according to claim 24, wherein, in response to a codepoint activated by the second MAC CE signaling comprising a second codepoint corresponding to one set of unified TCI states,
the indication information is configured to indicate that one set of unified TCI states corresponding to the plurality of second codepoints is used for a specified control resource set pool index; or
the indication information is configured to indicate that one set of unified TCI states corresponding to each second codepoint is used for a specified control resource set pool index.

27. The method according to any one of claims 24 to 26, wherein the indication information is carried in a radio resource control (RRC) signaling and/or an MAC CE signaling.

28. The method according to claim 27, wherein the MAC CE signaling for activating the unified TCI state and the MAC CE signaling carrying the indication information are the same MAC CE signaling.

29. The method according to claim 22, wherein one set of the unified TCI state comprises a joint TCI state, or comprises at least one of a downlink TCI state and an uplink TCI state.

30. An apparatus for determining a transmission configuration indicator (TCI) state, applied to a terminal, comprising:
a receiving unit, configured to receive configuration information sent by a network device, wherein the configuration information is configured to configure a component carrier list, and to receive a medium-access-control control element (MAC CE) signaling, wherein the MAC CE signaling is configured to activate a unified TCI state of a first serving cell and/or a second serving cell;
wherein the component carrier list comprises at least one serving cell, and the at least one serving cell comprises the first serving cell for single transmission reception point (S-DCI) indicator based multi-transmission reception point (M-TRP) transmission, and/or the second serving cell for multi-downlink control information (M-DCI) indicator based M-TRP transmission.

31. An apparatus for determining a transmission configuration indicator (TCI) state, applied to a network device, comprising:
a sending unit, configured to send configuration information, wherein the configuration information is configured to configure a component carrier list, and to send a medium-access-control control element (MAC CE) signaling, wherein the MAC CE signaling is configured to activate a unified TCI state of a first serving cell and/or a second serving cell;
wherein the component carrier list comprises at least one serving cell, and the at least one serving cell comprises the first serving cell for single transmission reception point (S-DCI) indicator based multi-transmission reception point (M-TRP) transmission, and/or the second serving cell for multi-downlink control information (M-DCI) indicator based M-TRP transmission.

32. An apparatus for determining a transmission configuration indicator (TCI) state, comprising:
a processor; and
a memory for storing processor-executable instructions;
wherein the processor is configured to perform the method of any one of claims 1 to 17.

33. An apparatus for determining a transmission configuration indicator (TCI) state, comprising:
a processor; and
a memory for storing processor-executable instructions;
wherein the processor is configured to perform the method of any one of claims 18 to 29.

34. A storage medium having stored therein instructions that, when executed by a processor, cause the processor to perform the method for determining a transmission configuration indicator (TCI) state of any one of claims 1 to 17.

35. A storage medium having stored therein instructions that, when executed by a processor, cause the processor to perform the method for determining a transmission configuration indicator (TCI) state of any one of claims 18 to 29.
